# EUROPEAN PATENT SPECIFICATION

(11) **EP 3 298 106 B1**
(45) Date of publication and mention of the grant of the patent: **29.12.2021**
(21) Application number: 16729965.0
(22) Date of filing: 23.05.2016
(51) Int. Cl.: C09K 21/02, E06B 3/673, E06B 5/16

(54) **KIT FOR THE PREPARATION OF A FIRE RESISTANT MATERIAL**
KIT ZUR HERSTELLUNG EINES BRANDSCHUTZMATERIALS
KIT DE PRÉPARATION D'UN MATÉRIAU IGNIFUGE

(30) Priority: 22.05.2015 DE 102015108202
(43) Date of publication of application: 28.03.2018
(73) Proprietor: Pilkington Group Limited, Nr. Ormskirk, Lancashire L40 5UF (GB)
(72) Inventor: GRÜNZEL, Helga, 45894 Gelsenkirchen (DE); POERSCH, Andreas, 45888 Gelsenkirchen (DE); SIEBERT, Guido, 45891 Gelsenkirchen (DE); AUTH, Matthias, 45289 Essen (DE)
(74) Representative: Teasdale, Nicola Joanne
(86) International application number: PCT/GB2016/051483
(87) International publication number: WO 2016/189292

(56) References cited:
- WO-A2-2015/079265
- US-A1- 2012 205 600
- US-A1- 2014 360 652

## Description

### Field of the invention

The present invention relates to a method of filling cracks in existing fire resistant material located within door and window glazing frames, or of filling cavities within building elements such as door or window frames, dry wall constructions, floors, panels or filler bars, to produce a building element or a semi-finished product at least partially filled with a fire resistant material, and to a kit for preparing a water stable and water-form stable fire resistant material from a precursor product according to the method.

### Technical background

It is known to fill fire resistant materials into cavities of frames of fire resistant glazings.

For example, WO 2015/079265 A2 discloses a fire resistant article such as a frame, bulkhead, door, window blind, cable channel and/or wall, or a part thereof, comprising at least one cavity, wherein said at least one cavity is at least partially separated from an external environment by a housing, wherein said at least one cavity contains a first fire resistant material and i) a void and/or ii) a second fire resistant material.

Such fire resistant materials can also have an insulating or cooling effect to improve the fire resistance properties of the glazings. The cooling effect is achieved with the aid of endothermic reactions which are triggered by heat in the event of a fire. Furthermore, fire resistant materials can also have intumescent properties.

For example, US 2012/205600 A1 discloses a stable aqueous solution for the production of fire resistant glazings comprising: at least one alkali metal silicate; and an aqueous solution of at least one alkali-soluble anion of an acidic or amphoteric oxide and/or a complex thereof; and/or at least one alkali-soluble hydroxide, and/or alkali-soluble complex of elements selected from the group consisting of lithium, magnesium and calcium. The solution is used to form a transparent intumescent interlayer for the production of fire resistant glazings.

Alternatively, US 2014/360652 A1 discloses that fire resistant glazings having improved properties comprising a silicate based interlayer which contains from 35% to 43% by weight of water may be produced using a cast in place process.

It is also known to prepare fire resistant materials as preformed components, for example as inserts, or liquid, pumpable filling compounds, which harden within a defined period of time at the point of use. For example, DE 102012220176 A1 discloses a fire resistant composition with at least two different waterglasses and an organic substance as a CO₂ donor for improving intumescent behaviour. US 2014/0145104 A1 discloses a fire resistant material containing lightweight insulating film materials and water-absorbing fillers as well as fibres and/or thixotropic agents. A fire resistant material on a waterglass base is known also from PL 402 681 A1.

On account of the comparatively short hardening times involved when preparing fire resistant materials and the required order of adding components to form the fire resistant material, especially fire resistant materials based on waterglass, it has hitherto been necessary to mix together the components of the fire resistant material immediately before introduction of the fire resistant material into window or door frames, parts of dry wall constructions, floors, panels or filler bars. For this purpose, complex mixing plant has often been required in building materials factories or on building sites. Such requirements are both time-consuming and cost-intensive.

It has also already been proposed to transport prefabricated and already hardened shaped components or inserts of hardened fire resistant material to the point of use. This solution, however, quickly reaches its limitations when cavities with more complex geometries are to be filled and when filling is required without air gaps.

A moulding compound based on polyisocyanato-isocyanurates and flame-resistant or fire-resistant agents is known from EP 276726, which exists as a two-component moulding compound. This moulding compound, however, is not sufficiently moisture-resistant for many purposes and has low cooling properties.

Therefore, there exits the need for a fire resistant material which can be used directly at the point of use and which overcomes the limitations of the products currently available. The precursor product of the present invention therefore aims to provide a fire resistant material which may be prepared into the desired shape at the point of use, without expensive mixing plant, and which is easy to transport, whilst still possessing high moisture resistance.

It is therefore the aim of the present invention to provide a precursor product which forms fire resistant material and which is able to be used to fill cavities in for example, door and window glazing, and which is also able to repair cracks and cavities in exisiting fire resisitant material located within door and window glazings as and when required.

### Summary of the invention

Therefore according to a first aspect of the present invention there is provided a method of filling cracks in existing fire resistant material located within door and window glazing frames, or of filling cavities within building elements such as door or window frames, dry wall constructions, floors, panels or filler bars, to produce a building element or a semi-finished product at least partially filled with a fire resistant material comprising the steps of:
i) at the point of use, mixing together at least two precursor components prepared and retained separately in at least one transportable container, to form a precursor product;
ii) applying the precursor product to the cracks or cavities in the existing fire resistant material in the glazing frames or to the cavities within the building element; and
iii) allowing the precursor product to harden to form a fire resistant material, wherein
   one of the at least two precursor components comprises at least one waterglass; and a second of the at least two precursor components comprises a waterglass hardener; and wherein at least one of the two precursor components comprises a cooling agent and/or an insulating agent; and wherein the waterglass and waterglass hardener are kept separate prior to the point of use; and wherein
   the waterglass is present in the precursor product in a concentration range of from 2 to 90 wt %; and
   wherein the water glass hardener is present in the precursor product in a concentration range of 0.5 to 50 wt %; and wherein
      once hardened the fire resistant material forms a water-form stable and water stable fire resistant material which does not change shape by more than 20 % following contact with water.

Preferably the waterglass is present in the precursor product in a concentration range of from 2 to 75 % by weight or 2 to 45%. Most preferably the waterglass is present in the precursor product in a concentration range of from 15 to 35 % by weight. Preferably, each of the two precursor components comprises at least one cooling agent and/or insulating agent. Alternatively however, only one of the precursor components may comprise at least one cooling agent and/or at least one insulating agent.

In addition, at least one of the precursor components further comprises at least one filler material. Filler materials may act as cooling agents, insulating agents or may be inert materials which are water insoluble. For example, thixotropic agents which do not possess cooling or insulating properties but which adjust the viscosity of the precursor component may be used as filler materials.

Preferably the at least one filler material comprises one or more of: magnesium hydroxide, aluminium hydroxide, aluminium oxide hydrates, partially hydrated magnesium hydroxide and partially hydrated aluminium hydroxide slags, foam glass bubbles, glass hollow bubbles, ceramic hollow microspheres, smectite, perlite, mica and vermiculite. The at least one filler material is preferably chosen to be able to act as a cooling agent and/or insulating agent in the event of contact with a fire.

In accordance with the present invention at least one of the at least two precursor components may be in the form of: a liquid, preferably a liquid solution, a dispersion, preferably an emulsion or a suspension. Most preferably however, when at least one of the at least two precursor components is not in the form of a solid, it may be in the form of a liquid or a liquid solution.

In an alternative preferred embodiment of the present invention, at least one of the at least two precursor components is a kneadable compound. Alternatively, at least two of the precursor components are kneadable compounds. In this way, the precursor components may be readily moulded into the required shape.

In a further alternative embodiment of the present invention one of the precursor components may be in the form of a kneadable compound, powder, or granulate and the second precursor component is in the form of a liquid. In this way, a more fluid precursor product is obtainable.

Also in accordance with the present invention at least one of the at least two precursor components further comprises an agent for controlling moisture balance. Suitable agents for controlling moisture balance may comprise one or more compounds selected from clay minerals, silica gel or zeolites.

In addition, in the precursor product according to the present invention at least one of the at least two precursor components may further comprise organic components. Suitable organic components may comprise one or more compounds selected from methyl cellulose, hydroxymethyl- cellulose and/or other cellulose derivatives.

In a further embodiment of the present invention at least one of the at least two precursor components in the precursor product may comprises a colourant. Suitable colourants may comprise a pigment or a dye, preferably a pigment as listed in the International Index of Colour Colour Index 4th Edition. The use of a colorant may be used to classify the precursor product and also enables the level of mixing of the precursor components to be monitored. Suitable colourants may also acts as cooling agents.

It is preferred that in the precursor product according to the present invention that the ratio of the sum of the waterglass to the ratio of the sum of the waterglass hardener is in the range of 30: 1 to 1: 1. More preferably, the ratio of the sum of the waterglass to the ratio of the sum of the waterglass hardener is in the range of 15: 1 to 2: 1. Even more preferably, the ratio of the sum of the waterglass to the ratio of the sum of the waterglass hardener is in the range of 10: 1 to 3: 1.

It is also preferred that the waterglass is selected from the group comprising: sodium waterglass, potassium waterglass, lithium waterglass or mixtures thereof.

The waterglasshardener is preferably selected from groups 2 and/or 12, and/or 13 and/or 14 comprising: aluminium phosphate, CaO, Zinc, Ca(OH)₂ and triglyceride 1,2,3-triacetoxypropane.

When the precursor product comprises an insulating agent, this is preferably selected from the group comprising: glass foam bubbles, glass hollow bubbles, ceramic foam bubbles, ceramic hollow bubbles, wood and wood chips, vermiculite and celluloses.

When the precursor product comprises a cooling agent, this is preferably selected from the group comprising: Al(OH)₃, Mg(OH)₂, Silica, Ca(OH)₂, glycerol, ethylene glycol, polyethylene glycol, iron hydroxides and zinc hydroxide. The cooling agent is preferably present in the precursor product in a concentration range of from 25% to 85% by weight.

Likewise, the insulating agent is preferably present in the precursor product in a concentration range of from 25% to 85% by weight.

In the first aspect of the present invention a shaped building block (18) comprising a first preformed fire resistant material (10") is preferably inserted into the cavity and any remaining part of the cavity is then filled with the precursor product comprising the at least two precursor components.

Alternatively, the at least two precursor components may be mixed to form a solid mixture; and the solid mixture activated by the addition of at least one liquid, preferably water and/or ethylene glycol and/or glycerol in a suitable quantity to form the precursor product prior to insertion of the precursor product into the cavity or crack in the building component or semi-finished product.

Also in relation to the first aspect of the present invention the two precursor components (A, B) may be both present as solids; and one of the two precursor components may be mixed in a first step with at least one liquid, preferably water and/or ethylene glycol and/or glycerol; followed by the addition of the second precursor component to form the precursor product.

According to a second aspect of the present invention there is provided a kit for preparing a water stable and water-form stable fire resistant material from a precursor product according to the method of the first aspect with at least two precursor components wherein the kit comprises:
i) a first precursor components comprising at least one waterglass; and
ii) a second precursor components comprising at least one waterglass hardener; wherein the first and second components are contained in a receptacle and wherein the precursor components are separated from each other prior to mixing at the point of use or repair, and wherein
   once hardened the water stable and water-form stable fire resistant material does not change shape by more than 20 % following contact with water.

For example, if a precursor component is in solid form, it is possible to provide same in a bag or sack. The bag or sack may be water resistant as required to ensure that the precursor component does not absorb water. Alternatively, if the precursor component is in liquid form, it is possible to provide same in a bottle or canister. The bottle or canister may also be water resistant as required.

Alternatively, the precursor components may be mixed with one or more solid filler and packaged in a bag or sack. In addition, the precursor components may be provided in a compartmentalized container which may also be water resistant as required.

The kit preferably comprises at least one cooling agent and/or an insulating agent and the cooling and/or insulating agent may be separated from the at least one waterglass and the at least one water glass hardener.

The kit may also preferably comprise at least one cooling agent and/or an insulating agent; wherein the cooling and/or insulating agent is provided with the at least one waterglass and the at least one water glass hardener.

The present invention therefore proposes a mechanism by which a precursor product comprising at least two precursor components may be reacted together as and when required to produce a fire resistant material with a matrix of waterglass, wherein the precursor components may be stored until required and which when mixed together produce a precursor product which can be poured or mouled and hardened to prodcue a fire resistant material.

At least one of the precursor components comprises at least one cooling agent and/or an insulating agent. A first of the at least two precursor components comprises at least one waterglass and a second of the at least two precursor components comprises at least one chemical compound which reacts with the waterglass to form a water-stable compound. This chemical compound is referred to herein as a waterglass hardener.

In the context of the present invention, the term 'water-stable compound' is intended to denote a compound or a material that essentially does not change its shape or its volume in contact with moisture, and even when it is immersed in water. The fire-resistant material formed from the precursor product of the present invention is therefore a 'water-stable compound' and also a 'water-form stable compound'.

That is, the fire resistant material formed from the precursor product according to the present invention is a water-stable compound and also a form stable compound. More specifically, the fire resistant material formed from the precursor product according to the present invention does not change its volume or shape in contact with water by more than 20%. More preferably, the fire resistant material formed from the precursor product according to the present invention does not change its volume or shape in contact with water by more than 15%. Even more preferably the fire resistant material formed from the precursor product according to the present invention does not change its volume or shape in contact with water by more than 10%. Most preferably the fire resistant material formed from the precursor product according to the present invention does not change its volume or shape in contact with water by more than 5%. Most especially, the fire resistant material formed from the precursor product according to the present invention does not change its volume or shape in contact with water by more than 2.5%. That is, it is preferred that the fire resistant material formed from the precursor product according to the present invention does not change its volume or shape in contact with water by more than 1%. Most preferably, there is less than a 1% change in the volume and shape of fire resistant material formed from the precursor product according to the present invention when the fire resistant material is immersed in water.

It is important in respect of the present invention that the fire resistant material formed form the precursor product according to the present invention is water stable since if not, when used in for example a window or door frame, the fire resistant material may condensate over time due to moisture in the air, and which may ultimately lead to expansion and subsequently frame failure.

Waterglass in the context of the present invention refers for example to solid, water-soluble alkali silicates and their aqueous solutions or suspensions.

The precursor product according to the present invention may form a waterglass matrix in the finished fire resistant material and may preferably comprise one or more cooling agents and/or insulating agents as well as optional further components, which will be discussed in detail below. The latter may be added by the person skilled in the art, depending on the requirements of the final product, to one or both of the two precursor components.

In an advantageous embodiment of the invention, the precursor product is part of a modular system with a plurality of precursor components which may be combined in pairs and which may be selected flexibly to produce a fire resistant material with desired properties. For example, a basic precursor component may be combined with a precursor component with a high content of insulating agents to form a precursor product for fire resistant materials with good isolation properties.

As an alternative to this, a basic precursor component may be combined with a precursor component with a high content of cooling agents to form a precursor product for fire resistant materials with good cooling properties. Further selection options may relate to the viscosity of the non-hardened mixture of the precursor components or to the form stability of the end product.

If more than two precursor components are used, the latter may be either all mixed together simultaneously in one mixing process, in order to produce the hardened fire resistant material therefrom, or the mixing process may be split up into individual steps, for example, in order to add the most reactive precursor component at the latest possible moment to pre-mixed further precursor components.

In the fire resistant material produced using the precursor product according to the present invention, the waterglass matrix formed may act like a chemically stable adhesive which binds the various components of the fire resistant material together even at high temperatures. A matrix that is stable at room temperature or slightly raised temperatures may of course also be achieved by the use of polymers, but careful selection of the polymers is required for such a matrix to ensure that the matrix is resistant at temperatures occurring in the event of a fire and tends which retains structural integrity. To ensure this, additional waterglass may be required.

Fire resistant materials that are produced using the precursor product according to the present invention meet fire testing standards such as EI 30. Test EI 30 involves fire testing a window or door frame by monitoring the temperature of the frame at eight positions using 8 sensors during standard fire test conditions. To pass the EI 30 test, none of the sensors are allowed to detect a temperature change of greater than 180 K in the first 30 minutes of the test. Therefore, if the tests are carried out at a room temperature of 25 °C, to pass the tests the sensors must not have detected a temperature of greater than 205 °C.

It has been found that the method of the present invention produces fire resistant material with particularly enhanced cooling performance, when incorporated into inserts for fire resistant systems such as glazing frames, doors, bulkheads, blinds and/or walls. The particular combination of the components in the precursor product also affords structural and chemical stability alongside fire resistance performance that enables the material to be used for said inserts, wall partitions, flooring, plates or filler bars in buildings.

The presence of a cooling agent in the precursor product of the present invention operates by using heat energy from a fire to undergo an endergonic, preferably an endothermic reaction. The reaction may involve for example the evaporation of a liquid such as water, or the decomposition of a product for instance the conversion of aluminium hydroxide to water and aluminium oxide. The cooling effect may also come from other reactions that consume energy, especially heat energy, such as phase changes, melting, salt solvation, crystal water release and other reactions.

### Waterglass / First precursor component

Suitable waterglass may include for example: sodium waterglass (soda waterglass), potassium waterglass, lithium waterglass and/or a mixture of these materials. The use of potassium waterglass, compared to the less expensive sodium waterglass, leads to a better corrosion resistance and strength of the fire resistant material and of composite materials that comprise such a fire resistant material. Potassium waterglass is therefore preferably used in applications which are subjected to greater mechanical loads, whilst use may otherwise be made of the low-cost sodium waterglass or mixtures of various alkali waterglasses.

The waterglasses may be used in liquid and/or solid form. For the selection of the waterglass, or the waterglasses and their quantity ratios in the first precursor components, reference is made to PCT/GB2014/053568, the content of which is incorporated by reference in this regard into the disclosure content of the present application.

For example, in the first precursor component, solid or liquid waterglass may be provided which react with a waterglass hardener during the hardening of the fire resistant material.

It is preferred that solid or liquid elements of Group 1 of the periodic table, are used as a waterglass in one or the precursor components of the present invention and which may then react with a waterglass hardener during the hardening of the fire resistant material.

The potassium and/or sodium waterglass and/or lithium waterglass and/or mixtures thereof are preferably present in the precursor product at a total concentration of at least 2% by weight. More preferably the potassium and/or sodium waterglass and/or lithium waterglass and/or mixtures thereof are present in the precursor product at a total concentration of at least 5% by weight. Even more preferably the potassium and/or sodium waterglass and/or lithium waterglass and/or mixtures thereof are present in the precursor product at a total concentration of at least 8% by weight. Most preferably the potassium and/or sodium waterglass and/or lithium waterglass and/or mixtures thereof are present in the precursor product at a total concentration of at least 8%, or in an amount of at least 10% by weight; or the potassium and/or sodium waterglass and/or lithium waterglass and/or mixtures thereof are present in the precursor product at a total concentration of at least 15%.

In addition, it is preferred that the potassium and/or sodium waterglass and/or lithium waterglass and/or mixtures thereof are present in the precursor product at a total concentration of at most 100% by weight. More preferably the potassium and/or sodium waterglass and/or lithium waterglass and/or mixtures thereof are present in the precursor product at a total concentration of at most 80% by weight. Even more preferably the potassium and/or sodium waterglass and/or lithium waterglass and/or mixtures thereof are present in the precursor product at a total concentration of at most 75%, or at a concentration of at most 60%. Most preferably the potassium and/or sodium waterglass and/or lithium waterglass and/or mixtures thereof are present in the precursor product at a total concentration of at most 40% or at most 25% by weight.

Therefore, the waterglass and/or the one or more solid or liquid silicates of the elements of Groups 1 of the periodic table are preferably present in the precursor product at a total concentration in the range of from 2% by weight to 100% by weight. More preferably, the waterglass and/or the one or more solid or liquid silicates of the elements of Groups 1 of the periodic table are present in the precursor product at a total concentration of from 5% by weight to 90% by weight. Even more preferably, the waterglass and/or the one or more solid or liquid silicates of the elements of Groups 1 of the periodic table are present in the precursor product at a total concentration of from 8% by weight to 35% by weight. Most preferably, the waterglass and/or the one or more solid or liquid silicates of the elements of Groups 1 of the periodic table are present in the precursor product at a total concentration of from 10% by weight to 15% by weight. These preferred ranges ensure that the matrix provides sufficient support and room for the various other components that are present in the mixture and material.

Through the addition of foreign ions such as lithium salts or ammonium salts, the properties of the matrix may also be adapted as required.

Further possible components of the first precursor component comprising waterglass are: polyols, preferably glycerol, ethylene glycol, polyethylene glycol and/or sugar and their compounds, as well as surfactants, wollastonite, silicic acids and their derivatives, such as silicic acid gel, zeolyte or silica gel, as well as disilicate or trisilicate. As further components, filler materials may be added to adjust the required viscosity/plasticity. Filler materials are preferably inert materials.

### Waterglass hardener / Second precursor component

Waterglass hardeners used in the present invention may preferably comprise compounds of the groups 2 and 13 of the periodic table, preferably phosphates, oxides, carbonates and/or organo compounds. In particular waterglass hardeners may comprise: aluminium orthophosphate AlPO₄, aluminium methaphosphate (Al(PO₃)₃), aluminium polyphosphate, CaO combinations of aluminium phosphate, and/or Ca(OH)₂, and combinations thereof. Furthermore, zinc compounds, such as zinc oxide or zinc borates, carboxylic acids, carboxylic acid ester, preferably triacetin and/or ethylene glycol diacetate, amino acids and polyamino acids and their mixtures, preferably casein, as well as silica sols may also be used.

In advantageous embodiments of the invention, a plurality of waterglass hardeners may also be used together, for example Ca(OH)₂ and Al(PO₃)₃ or CaO and aluminium phosphate or triacetin, silica sol and aluminium phosphate or casein and Ca(OH)₂.

The waterglass hardener may be present in liquid or solid form. If it is a solid, the waterglass hardener in the second precursor component preferably has an average volume-based particle size (wherein the size of a given particle corresponds to the diameter of the sphere that has the same volume as the given particle) of less than 5 mm. More preferably the waterglass hardener in the second precursor component has an average volume-based particle size of less than 2 mm. Still more preferably the waterglass hardener in the second precursor component has an average volume-based particle size of less than 1 mm; even more preferably less than 0.5 mm. Most preferably the waterglass hardener in the second precursor component has an average volume-based particle size of less than 0.25 mm. These preferred ranges are advantageous, because a smaller particle size leads to a higher reaction rate with alkali metal silicates. The particle size can be measured using a Malvern Mastersizer (RTM).

For the selection of the ratio and the quantity ratios of the waterglass hardener in the second precursor component, reference is made to PCT/GB2014/053568, the contents of which is incorporated by reference in this regard into the content of the present application. For example, in certain embodiments of the present invention, the one or more waterglass hardeners in the second component may be present at a total concentration of at least 0.5% by weight. More preferably the one or more waterglass hardeners in the second component are present at a concentration of at least 1% by weight. Even more preferably the one or more waterglass hardeners in the second component are present at a concentration of at least 2% by weight. Most preferably the one or more waterglass hardeners in the second component are present at a concentration of at least 5% by weight. In addition, the one or more waterglass hardeners in the second component are present at a concentration of at most 50% by weight. More preferably, the one or more waterglass hardeners in the second component are present at a concentration of at most 30% by weight. Even more preferably, the one or more waterglass hardeners in the second component are present at a concentration of at most 20% by weight.

Therefore the one or more waterglass hardeners in the second component are present at a concentration range of between 0.5% by weight and 50% by weight. More preferably, the one or more waterglass hardeners in the second component are present at a concentration range of between 1.0% by weight and 30% by weight. Most preferably, the one or more waterglass hardeners in the second component are present at a concentration range of between 2% and 20% by weight. These preferred ranges provide sufficient mechanical stability whilst allowing for sufficient cooling agents.

The second precursor component optionally comprises, apart from the aforementioned waterglass hardeners, metal oxides of the second main group, halides, carbonates, hydrogen carbonates and/or sulphates of the first two main groups.

### Reaction of waterglass with waterglass hardener

In accordance with the present invention, when the two components of the precursor product are mixed together, the waterglass of a first component reacts with the waterglass hardener of the second component in the presence of sufficient liquid such as water, and over time, the resultant precursor product hardens to form a fire resistant material.

The quantity ratios of the waterglass may be selected by the person skilled in the art according to the criteria stated in PCT/GB2014/053568 such that, during hardening, a form-stable and water-stable fire resistant material is formed.

For example, the aforementioned waterglass hardeners may be reacted with liquid waterglass during hardening in order to form for a stable silicate matrix, for example, preferably an aluminium silicate and/or a calcium silicate, which hardens and ensures that it is water-stable in the above-described sense.

The strength of the fire resistant material comprising the two components may be adjusted by a suitable selection of the mass ratio of the waterglass or the waterglasses to the waterglass hardener(s). To achieve a sufficient strength, the mass ratio of the mass of all the waterglasses contained in the reaction mixture to the mass of all the waterglass hardeners contained in the reaction mixture preferably lies in the range from 1000:1 to 1:500. Still more preferably, the mass of all the waterglass hardeners contained in the reaction mixture preferably lies in the range from 100:1 to 1:50. Most preferably, the mass of all the waterglass hardeners contained in the reaction mixture preferably lies in the range from 20:1 to 1:30.

In a preferred embodiment according to the invention, both the waterglasses and the waterglass hardeners may be used in solid form. Since the two components in solid form do not react with one another, the two components may be prepared as a powdery mixture in which no hardening reaction occurs. The hardening and formation of the fire resistant material does not begin until the addition of a sufficient quantity of liquid or the entrance of moisture.

With this approach, it is preferred that the starting material is distributed as homogeneously as possible and agglomeration should be prevented. For the highest possible homogeneity, the substance-quantity ratio (substance quantity inert material / substance quantity reactive material) in the total quantity of the precursor components used to produce the fire resistant material preferably lies at greater or equal to (≥) 10⁻⁶; still more preferably at greater than or equal to (≥) 10⁻³, and most preferably at greater than or equal to (≥) 10⁻¹. This substance-quantity ratio is preferably less than 10⁶; more preferably less than (<) 10³ and still more preferably less than (<) 150. These data values relate to the case where the solid components used have a similar particle diameter. Inert materials in the sense of the above substance-quantity ratio, which act as thinners for the reactive components, are amongst others: cooling agents, insulating agents and solvents, such as water, ethylene glycol and glycerol (glycerine). The reactive materials in the sense of the above substance-quantity ratio include the non-hardened waterglasses and the waterglass hardeners. The substance-quantity ratios may be different in the individual precursor components.

If appropriate, the use of pure substances without thinners is also possible. For example, pure waterglass hardener in a highly diluted waterglass may be used as a precursor component. The use of undiluted, pure, liquid triacetin as a waterglass hardener is thus possible in many cases. On account of its high reactivity, however, this liquid is introduced into the mixture only at the end of the mixing of all the precursor components. The use of undiluted pure substances is only possible if the pure substances have a sufficiently low reactivity. If the reaction starts slowly or is somewhat delayed, or if it is only activated by a trigger (for example heat, UV light, etc.), pure substances may be used. For situations in which the components possess high reactivity, the use of pure substances is excluded.

When one or both of the precursor components comprise liquid, it is preferred that the precursor product preferably comprises: at least 5% by weight of one or more liquid; more preferably at least 10% by weight; even more preferably at least 15% by weight; most preferably at least 20% by weight. In addition, it is preferred that the precursor product preferably comprises: at most 50% by weight of one or more liquid; more preferably at most 40% by weight; even more preferably at most 35% by weight; most preferably at most 30% by weight based on the total weight of the mixture. That is, the preferred range for the liquid is from 5% by weight to 50 % by weight. More preferably, the precursor product comprises from 10% to 40% by weight, and most preferably, from 15% by weight to 35% by weight. These preferred ranges ensure sufficient cooling effect without unacceptable loss of mechanical stability.

As a general rule, for all types of more or less reactive waterglasses and waterglass hardeners, the waterglasses or waterglass hardeners and their degree of dilution are selected such that the reaction time of the precursor components up to the hardened fire resistant material is long compared to the time required for mixing.

The form of the inventive preparation of the final fire resistant material preferably comprises at least two precursor components and enables problem-free transport to the point of use without the risk of premature hardening of the components. A high-performance fire resistant material may therefore be produced, which has a high moisture resistance (water stability) on account of the waterglass matrix forming during hardening. By a suitable selection of a cooling and/or insulating agent, the desired cooling or insulating properties of the fire resistant material may also be adjusted.

Depending on the area of application and the transport conditions, it may be advantageous to prepare one or more of the constituents of the precursor components as a soluble granulate, as a pasty mass or as pumpable liquid, preferably as a solution and/or suspension or emulsion. In particular, water, polyols such as ethylene glycol, glycerine (glcerol) or suchlike come into consideration as solvents. The solvents may be added as a third precursor component to the mixture comprising the at least two precursor components during the production of the fire resistant material.

In a particularly advantageous embodiment of the invention, at least one of the at least two precursor components is a kneadable compound. Alternatively, both precursor components may be kneadable compounds with a similar viscosity, which can be kneaded with one another before use and can thus also be used as repair cement.

The precursor components present as kneadable compounds are preferably packed airtight during transport to avoid loss of liquid, for example in foil, tubes or tubs.

### Adjustment of basicity

The basicity of the precursor components may be adjusted in a targeted manner by adding further inorganic and/or organic bases. For example, the basicity may be increased by adding quaternary ammonium salts such as TMAH (tetramethylammonium hydroxide), without changing the modulus. This is advantageous, since the solubility of individual mixing components such as the aluminium phosphates is increased by the higher basicity and the reaction thus starts more quickly.

The addition of organic acids and/or their salts, on the other hand, may reduce or buffer the basicity. This may be advantageous for delaying the hardening.

The first waterglass-containing precursor component or the total mixture arising after mixing the two components advantageously has a pH value higher than 7. More preferably the first waterglass-containing precursor component or the total mixture arising after mixing the two components advantageously has a pH value higher than 8. Even more preferably, the first waterglass-containing precursor component or the total mixture arising after mixing the two components advantageously has a pH value higher than 9.

If the solubility is set too low, the phosphates and/or organo compounds used as water hardeners do not react as well with the waterglass; an excessively high solubility, on the other hand, means that the components may react instantaneously (and therefore harden), which may make the handling of the mixture comprising the precursor components difficult.

### Insulating agent

The insulating agent controls the consumption of the cooling agent during a fire and helps to ensure that the cooling agent is consumed gradually and not completely spent right at the start of a fire. Furthermore, the heat-insulating properties of the material and its heat transmission coefficient are improved by the addition of the insulating agent. Furthermore the insulating agent acts as a barrier to reduce the rate of loss of liquids and gases that may have a cooling effect for example, water and water vapour.

Regarding the selection and the quantity ratios of the insulating agent, reference is made to PCT/GB2014/053568, the contents of which are incorporated herein by reference in the disclosure content of the present application. Further suitable filler materials are slags, smectite, perlite, mica and vermiculite.

For example, the insulating agent may comprise one or more of hollow microspheres and/or foam microspheres. Preferably said hollow microspheres comprise hollow glass microspheres and/or hollow ceramic microspheres. Preferably said foam microspheres comprise foam glass granulates and/or foam ceramic granulates. In some cases the insulating agent may alternatively or additionally comprise polymer microspheres.

Polymer microspheres are advantageous because their properties may be varied to a great extent. Therefore adhesion with the matrix can be optimized, which increases the form stability. In some embodiments the microspheres are coated with functional groups. These functional groups may react with the matrix. Such reactions can further stabilise the matrix. Preferably the hollow microspheres have an average volume-based particle size (where the size of a given particle equals the diameter of the sphere that has the same volume as the given particle) of more than 40µm. More preferably the hollow microspheres have an average volume-based particle size of more than 80µm. Even more preferably the hollow microspheres have an average volume-based particle size of more than 100µm. It is however preferred that the hollow microspheres have an average volume-based particle size of preferably less than 2mm, more preferably less than 500µm.

In some embodiments the insulating agent may alternatively or additionally comprise metals, glass- and/or ceramic- flakes. Hollow glass microspheres and/or glass flakes melt at around 900°C to form a glass film which isolates the cooling agent and acts as a barrier to the release of cooling liquids and vapours to ensure that they are released gradually. Preferably the glass flakes comprise borosilicate glass. Ceramic flakes do not melt at temperatures of around 900 °C and therefore only act as a barrier in the event of a fire. Although metals, for example, metal foil and/or metal foil flakes, have a good heat transfer rate, they can also be used as an insulating agent because, due to their barrier function with regard to water and/or water vapour, they help to reduce the loss of water during a fire. The metal may be for example aluminium, zinc and/or any metal, which is oxidized under these conditions. The metal may be in form of particles, such as nanoparticles. The metal may be introduced as a suspension in a carrier liquid. Some embodiments may comprise one or more alkali-hydroxides, which can activate the metal. Aluminates such as Na[Al(OH)₄] are able to react in the presence of heat, which provides further cooling properties.

When present in one or both of the precursor components the insulating agent is preferably present at a total concentration of from 0.1% by weight to at most 50% by weight. More preferably the insulating agent is present at a total concentration of at least 1% by weight to at most 25% by weight. Even more preferably the insulating agent is present at a total concentration of at least 2% by weight to at most 10% by weight. Most preferably the insulating agent is present at a total concentration of at least 3% by weight and at a total concentration of 5% by weight based on the total weight of the precursor product. These preferred ranges help ensure the appropriate level of isolation of cooling liquids and vapours and reduce the density of the material.

When present in precursor product, said hollow microspheres are preferably present at a total concentration of: at least 0.5% by weight; more preferably at least 1% by weight; even more preferably at least 2% by weight; most preferably at least 3% by weight. In addition, said hollow microspheres are preferably present at a total concentration of: at most 75% by weight; more preferably at most 25% by weight; even more preferably at most 10% by weight; and most preferably at most 5% by weight based on the total weight of the mixture or the material. These preferred ranges also help to ensure the appropriate level of isolation of cooling liquids and vapours and reduce the density of the material.

When present in the precursor product, wood and/or cellulose chips preferably incorporate an alkali metal silicate.

Alternatively or additionally the insulating agent may comprise one or more expandable polymer such as polystyrene, preferably Styropor (RTM). These insulating agents are beneficial because they can reduce the U-value of a system, indicating improved thermal insulation.

Alternatively or additionally the insulating agent may comprise one or more mineral such as talc, kaolin, pyrophyllite, bentonite, chlorite, vermiculite and/or mica. Such minerals are advantageous because they help to retain any unbound water in the material by effectively closing pores. Said one or more mineral may be combined with one or more alkali metal silicate. The combination of said mineral and said alkali metal silicate may be in the form of a liquid, for example by further comprising water. Further suitable insulating materials include: slags, smectite and perlite.

### Cooling agent

The cooling agent acts by using the thermal energy of a fire to carry out an endoergic, preferably endothermic reaction. It should be noted that different cooling agents have different activation temperature thresholds and may be added to the fire resistant material individually or in combination depending on the desired temperature behaviour. It is important for the choice and the mixing ratio of the cooling agents that the water vapour remains as long as possible in the system, that is, that the water vapour has a long dwell time.

Therefore, it may be advantageous to combine a plurality of cooling agents, so that a first cooling starts for example at approximately 100 °C, then a second cooling at approximately 200 °C and a third cooling at approximately 400 °C. The quantity ratios are preferably selected such that in each case only so much water vapour arises in these individual steps that the vapour pressure of the water vapour does not become excessively high and the water vapour at all events escapes slowly and in a controlled manner. For the selection, the quantity ratios and the particle size of the cooling agent or the plurality of cooling agents, reference is made to PCT/GB2014/053568, the disclosure of which is incorporated by reference into the present application.

For example, in certain embodiments of the present invention, the cooling agent, not taking into account any associated water of crystallisation, is present preferably in the range of a total concentration of at least 5% by weight to at most 95 % by weight. More preferably the cooling agent is present preferably at a concentration of at least 25% by weight to at most 80% by weight. Even more preferably the cooling agent is present preferably at a concentration of at least 35% by weight. Most preferably the cooling agent is present preferably at a concentration of at least 45% by weight. In addition, the cooling agent is present more preferably at a concentration of at most 70% by weight. Even more preferably the cooling agent is present at a concentration of at most 60% by weight. Most preferably the cooling agent is present at a concentration of at most 55% by weight based on the total weight of the precursor material. Such ranges are particularly suitable for applications in which the material is used in a frame that exhibits poor thermal isolation. These ranges allow for the presence of more insulating agent to prevent the loss of cooling liquids and vapours too quickly, as a result of the low thermal isolation of the frame.

Alternatively, for applications in which the precursor component is used in a frame that exhibits good thermal isolation, there is less need for insulating agent and more cooling agent may be used. In such situations, the cooling agent, not taking into account any associated water of crystallisation, is present preferably at a total concentration in the range of at least 35% by weight to at most 95% by weight. More preferably, the cooling agent is present at a total concentration in the range of at least 55% by weight to at most 90% by weight. Even more preferably, the cooling agent is present at a total concentration in the range of at least 75% by weight to at most 87%, or in the range of at least 80% by weight to at most 87% by weight, based on the total weight of the precursor component.

The cooling agent may be granulated. In which case, the granulated cooling agent preferably has an average volume-based particle size (where the size of a given particle equals the diameter of the sphere that has the same volume as the given particle) of: less than 5mm; more preferably less than 2mm; even more preferably less than 1mm; even more preferably less than 0.2mm; and most preferably less than 0.1mm. These preferred ranges are beneficial because if the particles are too large this can cause inhomogeneities in the material which can affect stability and fire performance. Preferably the granulated cooling agent is a powder. The smaller the particle size of the cooling agent, the higher the form stability of the material, but the greater surface area that needs to be bound by the matrix. Particle size may be measured using a Malvern Mastersizer (RTM). Preferably the granulated cooling agent comprises a mixture of particles with at least two, more preferably at least three, even more preferably at least four, different average volume-based particle sizes. Combining different particle sizes in one mixture helps to achieve a denser packing of the particles, which improves form stability, reduces porosity and uses available space more effectively.

In one embodiment the cooling agent preferably comprises at least two cooling agents. A suitable first cooling agent may comprise one or more of: salt hydrates for example, MgSO₄.7H₂O, NaSO₄.xH₂O (where x = 0-10), NaHCO₃ and/or CaSO₄.xH₂O (where x = 0-2), silica gel, molecular sieves, alkali-borates such as Na₂[B₄O₅(OH)₄]·8H₂O, zinc-borates, organo-zinc-borates, glycols, polyols, non-flammable organic solvents such as DMSO and/or dried alkali metal silicates. These cooling agents decompose, releasing a cooling liquid, at relatively low temperatures of from around 90°C to 180°C, which helps to lower the temperature in the initial stages of a fire. The first cooling agents are particularly suitable for applications that require a substantial amount of cooling in the event of a fire, such as in rooms containing very sensitive contents (for example, gas bottles, computer devices).

When more than one cooling agent is present, the cooling agent is present preferably in the precursor component in an amount, not taking into account any associated water of crystallisation, at a total concentration in the range of at least 2% by weight to at most 40% by weight. More preferably, the cooling agent is present in an amount of at least 10% by weight; even more preferably at least 15% by weight; most preferably at least 20% by weight; but preferably at most 40% by weight; more preferably at most 35% by weight; even more preferably at most 30% by weight; most preferably at most 25% by weight based on the total weight of the precursor component. Dried alkali metal silicates may contain up to 15% by weight of water, preferably up to 10% by weight, even more preferably up to 5% by weight.

When the precursor component comprises a second the cooling agent, the second cooling agent may comprise one or more of: Al(OH)₃, AIO(OH), Zn(OH)₂, Fe(OH)₂, Fe(OH)₃, FeO(OH), Ca(OH)₂, and/or Mg(OH)₂. The second cooling agent is preferably stable at lower temperatures but decomposes, releasing a cooling liquid, at higher temperatures of from around 200°C to 600°C, which helps to lower the temperature as a fire progresses and aids the retention of the shape of the precursor component, that is, it helps prevent elasticity, sagging etc. The second cooling agent is particularly suited for use in for example, powder coated doors, bulkheads, blinds, or frames. In some preferred embodiments the second cooling agent, preferably Al(OH)₃, has an average volume-based particle size (where the size of a given particle equals the diameter of the sphere that has the same volume as the given particle) of: less than 300µm; more preferably less than 100µm; even more preferably less than 50µm; most preferably less than 40µm. These preferred particle sizes assist in enabling the Al(OH)₃ to close pores in the material. Whilst it is preferred that the precursor component comprises more than one cooling agent, it is also possible for the precursor product to comprise only one cooling agent.

In embodiments comprising more than one cooling agent, it is preferred that said second cooling agent, not taking into account any associated water of crystallisation, is present at a total concentration of: at least 5% by weight; more preferably at least 20% by weight; even more preferably at least 30% by weight; most preferably at least 35% by weight; but preferably at most 75% by weight; more preferably at most 55% by weight; even more preferably at most 45% by weight; most preferably at most 40% by weight based on the total weight of the precursor product. Such ranges are particularly suitable for applications in which the precursor product is used in a frame that exhibits poor thermal isolation. These ranges allow for the presence of more insulating agent to prevent the loss of cooling liquids and vapours too quickly, as a result of the low thermal isolation of the frame.

In some other embodiments, when present in the precursor product, said second cooling agent, not taking into account any associated water of crystallisation, is present at a total concentration of: at least 30% by weight; more preferably at least 45% by weight; even more preferably at least 60% by weight; most preferably at least 65% by weight; but preferably at most 90% by weight; more preferably at most 85% by weight; even more preferably at most 80% by weight; most preferably at most 75% by weight based on the total weight of the precursor product. Such ranges are particularly suitable for applications in which the material is used in a frame that exhibits good thermal isolation. In this case there is less need for the insulating agent and therefore more cooling agent can be used.

Preferably the cooling agent comprising one or more compounds selected from: MOH, M₂O, M₂SO₄, MHSO₄, M(PO₃)₃, MₓH₃₋ₓPO₄ (where x = 0 to 3), M₂CO₃, MHCO₃, borates such as M₂[B₄O₅(OH)₄] (where M = Li, Na, K, and/or NH₄), M'(OH)₂, M'O, M'CO₃, M'SO₄, M'PO₄ (where M' = Ca, Mg, Ba, Sr, and/or Fe), Al(OH)₃, Fe(OH)₃, Si(OH)₄, SiO(OH)₂, FeO(OH), AIO(OH), and/or salts thereof is hydrated i.e. said cooling agent possesses some water of crystallisation. For example said cooling agent may comprise M₂[B₄O₅(OH)₄]·8H₂O (where M = Li, Na, K, and/or NH₄).

In particular, zinc borates, which release water at approximately 290 to 415 °C, have proved to be advantageous cooling agents with higher activation temperatures, which may be provided in particular as a second cooling agent in addition to a cooling agent with a lower activation temperature. The following are highlighted as being particularly suitable for use in the present invention: zinc borate 2ZnO·3 B₂O₃·3.5H₂O (CAS registration number 138265-88-0) marketed under the trade name Firebrake ZB, zinc borate 2ZnO·3 B₂O₃ (CAS registration number 138265-88-0) marketed under the trade name Firebrake 500, zinc borate 4ZnO·B₂O₃·H₂O (CAS registration number 149749-62-2) marketed under the trade name Firebrake 415, zinc borate 4ZnO·6B₂O₃·7H₂O (CAS registration number 1332-07-6) marketed under the trade name ZB-467 and zinc borate 2ZnO·2B₂O₃·3H₂O (CAS registration number 1332-07-6) marketed under the trade name ZB-223.

Zinc borates may have an anti-corrosion effect through a synergy effect with zinc phosphate and barium borate or serve as colouring pigments. Furthermore, the additional effect of zinc borates as a fungicide may be advantageous in building materials with the fire resistant material according to the invention.

Vermiculite may be used as another cooling agent, and is effective at temperatures from 650 °C or above. This cooling agent is advantageous, since it is converted into an insulating agent after the release of water of crystallization with an increase in volume.

Further advantageous examples of endothermic decomposable filler materials that may act as a cooling agent in the event of a fire are magnesium hydroxide and/or aluminium hydroxide, aluminium oxide hydrates or partially hydrated magnesium hydroxide and/or aluminium hydroxide.

The cooling agent may further comprise one or more hygroscopic compounds. These compounds are able to increase the content of water in the material by reducing the local humidity. In some embodiments, alternatively or additionally, the precursor product may comprise layer silicates, for example, wollastonites and/or zeolites, and/or comprise grog (chamotte), mullite and/or bentonite which can be used to store water.

The cooling agent may further comprise one or more glycol and/or polyol. Preferably the glycol is ethylene glycol. Preferably the polyol is glycerol and/or polyethyleneglycol. When present in the precursor product, the polyol is present preferably at a total concentration of: at least 1% by weight; more preferably at least 2% by weight; even more preferably at least 4% by weight; most preferably at least 4% by weight; but preferably at most 20% by weight; more preferably at most 15% by weight; even more preferably at most 10% by weight; and most preferably at most 8% by weight based on the total weight of the precursor product. As the concentration of polyol increases, the flexibility of the precursor product produced when same is dried or cured increases. However, the incorporation of an excessive proportion of polyol can be disadvantageous due to an increase in flammability.

### Agents for controlling the moisture balance

The use of materials such as clay minerals, silica gel or zeolites, which have the ability to store water reversibly, may be useful also for the control of the water balance in the event of a fire. Depending on the structure and the ambient conditions, these materials may have a water content of approximately 20 %, that is, less than the water content of Al(OH)₃ with a value of 33%. The difference, however, is that the reaction of hydroxides is irreversible.

In the case of silica gel, water is physically bound in cavities and/or, through the strong interaction with the surface, and is may therefore be very strongly bound thereto. The degree of occupancy is governed by the ambient temperature and humidity.

For example, silica gel is able to release water at approximately 120 °C and is first consumed in the event of a fire. If, however, water vapour is released from another cooling agent, for example, Al(OH)₃, the latter enters into an interaction with the silica gel and in the most favourable case, the silica gel can be partially occupied again. Irrespective of this, the release of a part of the water vapour will be delayed, so that this cooling effect is maintained for longer.

Therefore, depending on the system, a substitution of the conventional cooling agents by silica gel may be overall advantageous, even if the total water content with this system is less than in the case of a comparable system with cooling agent alone.

Other agents that influence the release of water are hygroscopic compounds, such as triacetin, sorbite and/or magnesium silicates such as for example talcum, sepiolite and/or bentonite.

Triacetin, apart from its function as a waterglass hardener, is also an example of one such hygroscopic compound.

In another example of embodiment, expanded vermiculite is used, which enters into an interaction with the components according to the invention.

### Organic components

The form stability of fire resistant material can be improved by the addition of organic components. Form stability relates to the ability of a material to retain its shape. For example, low form stability means that during manufacturing, in particular during drying processes, a component will change its shape. This effect may also occur at standard atmospheric conditions if loss of water happens.

Regarding the selection and the microstructure of organic components in the precursor product, reference is made to the disclosure of PCT/GB2014/053568, which is incorporated herein by reference in this regard into the disclosure of the present application. For example the organic components may preferably comprise methyl cellulose, hydroxymethyl- cellulose and/or other cellulose derivatives. The methyl cellulose and/or other cellulose derivatives are preferably present in the precursor product at a total concentration of: at least 1% by weight; more preferably at least 3% by weight; even more preferably at least 4% by weight; but preferably at most 15% by weight; more preferably at most 10% by weight; even more preferably at most 7% by weight; and most preferably at most 5% by weight based on the total weight of the precursor product.
In alternative embodiments of the invention, the cooling agent may be pressed into an organic matrix.

### Liquids

The at least two precursor components preferably comprise in total: at least 3% by weight, but at most 75% by weight of one or more liquids. More preferably the material comprises: at least 5% by weight of one or more liquid; more preferably at least 7% by weight; even more preferably at least 10% by weight; most preferably at least 15% by weight; but at most 50% by weight of one or more liquid; more preferably at most 35% by weight; even more preferably at most 30% by weight; and most preferably at most 25% by weight based on the total weight of the two precursor components. These preferred ranges ensure sufficient cooling effect without unacceptable loss of mechanical stability. Preferably the one or more liquid comprises water.

These preferred ranges ensure an adequate cooling effect without an unacceptable loss of mechanical stability of the end product and ensure a sufficient reaction between waterglass and waterglass hardener during hardening.

If the liquid content is too low, this hinders the reaction of the waterglass and waterglass hardener, because the aluminium phosphates and/or organoaluminium compounds do not become sufficiently dissolved. If the liquid content is too high, only short-chained aluminium silicates arise in the reaction instead of the sought three-dimensional network, so that the hardness of the matrix comprising hardened waterglass may be insufficient in the finished fire resistant material.
Typically, the liquid comprises at least one solvent for at least one component of the fire resistant material and/or of the mixture comprising the precursor components. The one or more liquid(s) preferably comprise water.
The distribution of the above-described total liquid content between the precursor components may be selected with regard to the required transport properties. Alternatively, the liquid or parts thereof may be added as a third precursor component during the mixing of the at least two precursor components directly before the production of the fire resistant material, or for dissolving one or both of the at least two precursor components.

### Influencing of the hardening process

The precursor components may also comprise one or more retarding agents, for example: D(-) tartaric acid, L(+) tartaric acid, borates (for example borax), polyols (for example glycerine), and salts for example ZnO, CaO, MgO and/or (NH₄)₃PO₄, may also be used to influence the harding time during hardening.

Retarders slow the curing process and may make the precursor components easier to handle and therefore simplify the manufacture of the precursor product. The retarder may be preferably present at a total concentration of: at least 0.1% by weight; more preferably at least 0.5% by weight; even more preferably at least 1% by weight; most preferably at least 3% by weight; but preferably at most 20% by weight; more preferably at most 10% by weight; even more preferably at most 7% by weight; and most preferably at most 5% by weight based on the total weight of the precursor product.

### Adjustment of the viscosity

The viscosity or kneadability of the precursor product may be adjusted as desired by the addition of a suitable thixotropic agent. As an alternative or in addition to this, the viscosity or kneadability or plasticity of the kneading compound may be adjusted in a targeted manner by adjusting the filling ratio, (that is, the quantity of solids in relation to the liquids), for example by adding a filler material. The selected filler material preferably has in addition to its latter-mentioned function in the processing of the fire resistant material, a cooling, insulating or moisture-regulating function in the event of a fire.
Aluminosilicates and/or alkaline earth metal silicates can act as a thixotropic agent to ensure that the components of the mixture comprising the precursor components and the material remain uniformly distributed and are not separated from one another.
Examples of thixotropic agents include: the thixotropic agent marketed under the trade name Wollatrop SE, bentonite, aluminium hydroxide, magnesium hydroxide or silicon dioxide. Furthermore, aluminium oxide Al₂O₃, AIO(OH) or silica which may act as a cooling agent in the event of a fire may also be used.

The targeted adjustment of the viscosity is advantageous, since it allows the user to adapt the mixture to his requirements. Thus, in order to achieve an almost complete filling in the case of filling deep and filigree recesses for example, it is desirable that the stirred mixture has a lower viscosity than when only superficial cracks have to be dealt with.
In addition, especially in the case of the preparation as a kneading compound, polymers may be added, which harden with a high pH value or in the air and polymerise as a result of temperature. Furthermore, surfactants and/or emulsifying agents may be added to improve the processing properties.
According to the invention, the water stability may also be improved by adding polymers. A firm polymer composite arises as a result of the evaporation of the water and as a result of chemical cross-linking. Typical polymers which may be used include for example the polymers marketed under the trade names DA194, Ecrylic RA 646 H, LV 305 or Ecrothan 4075 from Ecronova Polymer GmbH.

Polymers can help to stabilise the structure of the finished fire resistant material, as a result of which its form stability and mechanical stability are increased; polymers can also be used to change the rheology of the fire resistant material (for example polycarboxylate ethers which can act as liquefiers) and improve the surface structure of the finished fire resistant material.
In some embodiments, organic compounds, for example polymers, may be used to form a stable foam, which produces an internal porosity due to the encapsulation of gas, as a result of which the thermal isolation properties may be be improved. These organic compounds are preferably surface active agents. During the mixing of the two precursor components, surface active agents may form a stable foam that hardens over time, as a result of which increased thermal isolation is provided.
In the case of embodiments with pumpable precursor components, bubble or foam formation may be promoted in a targeted manner or may be reduced by antifoaming agents. Siloxanes and silicones may react with an alkali metal silicate to form a stable network.
Regarding advantageous quantity ratios of the polymers and further additives, reference is made to PCT/GB2014/053568, the disclosure of which is incorporated herein by reference in this regard .

### Dyes

The visual examination of the degree of mixing during the mixing of two kneading compounds may be markedly facilitated by adding a dye, in particular a colouring pigment, to at least one of the two kneading compounds. Consideration may be given to mineral, organic or inorganic colouring pigments for use as colorants. For example, if a white dye is required, use may be made for example of TiO₂, SiO₂, Al(OH)₃, Al₂O₃ or ZnO. Apart from the colouring effect, these substances also have an additional effect as a cooling agent. Suitable organic colouring pigments are known to the person skilled in the art.

### Filling of cavities

A first aspect of the invention relates to a method for producing a component or semi-finished product filled at least with one fire resistant material of the type described above. It is proposed that the at least two precursor components are prepared separately in at least one transportable container, preferably in two transportable containers, and are mixed together immediately before the filling of the combined mixture into for example a cavity of the building component.

Through the use of additional surfactants or other surface-active substances, the interface tension of the fire resistant material may be influenced in a targeted manner. Reduction of the interface tension and an increase in the wettability are advantageous especially when filling filigree cavities.

In this regard, in one example of an embodiment of the present invention the surface of an element to be filled with the fire resistant material is treated before the actual filling step with a liquid substance, preferably with a primer, which improves the adhesion between the components according to the invention and the element to be filled.

According to another aspect of the method according to the invention, a shaped building block made of a first fire resistant material is first inserted into the cavity, and the remaining parts or air gaps of the cavity are then filled with a mixture of precursor components according to the invention and hardened in situ to form a second fire resistant material, wherein the two fire resistant materials may be either different in their chemical composition or largely the same. When the precursor components are used as starting materials for a repair cement of fire resistant material, the composition of the precursor components should preferably be adapted to that of the structure to be repaired.

A further aspect of the present invention concerns building elements with at least one cavity, preferably window or door profiles that are filled at least partially with a fire resistant material in accordance with the aforementioned method.

### Layer structure

The fire resistant material produced by the method_according to the invention may be prepared by adding different quantities of cooling agents and/or insulating agents to produce variants of the fire resistant material with a pronounced cooling effect or with a pronounced insulating effect.

The at least two precursor components may form the core of a building-block system, in such a way that at least two unchanging basic precursor components may be combined with a selection of various further precursor components to obtain fire resistant materials with different properties. The selection of a further precursor component with a high content of cooling agents thus leads to a fire resistant material with marked cooling properties, and the selection of a further precursor component with a high content of insulating agents leads to a fire resistant material with marked insulating properties.

These different variants may be combined in the application to form a composite material with an alternating structure, in which a layer with insulating properties alternates with a layer with cooling properties. The overall effect of such a structure is that the composite material may have advantages over a homogeneous mixture with the same overall composition.

In complex systems, such as frames, facades, windows, walls and/or doors, it may be advantageous to use different types of the fire resistant materials simultaneously. Complex systems often make more than one space available for insert/shaped building blocks or fillings. The quantity of cooling agent and insulating agent may be optimised depending on the location within the complex system.
Fire resistant materials with a pronounced cooling effect, that is, a comparatively high content of cooling agent and a low content of insulating agent are preferably incorporated at a side of a complex system facing away from the fire. Fire resistant materials with a pronounced insulating effect that is, a comparatively high content of insulating agent and a low content of cooling agent, are preferably incorporated at a side of a complex system facing the fire. In the case of symmetrical structures, it is advantageous to use materials with a pronounced insulating effect centrally.

The above-described embodiments of the invention and the appended claims as well as the figures show numerous features in special combinations. The person skilled in the art will also consider the features and the advantages individually and, depending on the desired area of application, will combine them to form further combinations and sub-combinations, in order to adapt the invention defined in the claims to his or her requirements.

### Brief description of the figures

Figure 1 represents diagrammatically a first embodiment of a method for producing a fire resistant material according to the present invention producing precursor product (C), from two kneadable precursor components (A) and (B) respectively.
Figure 2 represents diagrammatically a second embodiment of method for producing a fire resistant material according to the present invention producing precursor product (G), from a liquid precursor component (E) and a precursor component constituted as a solid (D);
Figure 3 represents diagrammatically a third embodiment of a method for producing a fire resistant material according to the present invention producing precursor product (L), from two precursor components constituted as a solid (J) and (L) respectively in combination with liquid (F);
Figure 4 shows an example of a window profile produced by the method according to the first aspect of the present invention filled with a fire resistant material;
Figure 5 shows a window profile according to the invention filled with an inserted shaped building block and a fire resistant material filled in liquid form and hardened, according to a further embodiment of the invention;
Figure 6 shows a further embodiment of the window profile according the invention;
Figure 7 shows a cable gland sealed with a fire resistant material according to the invention; and
Figure 8 shows in detail the pins mentioned in Figure 6.

### Description of the examples of embodiment

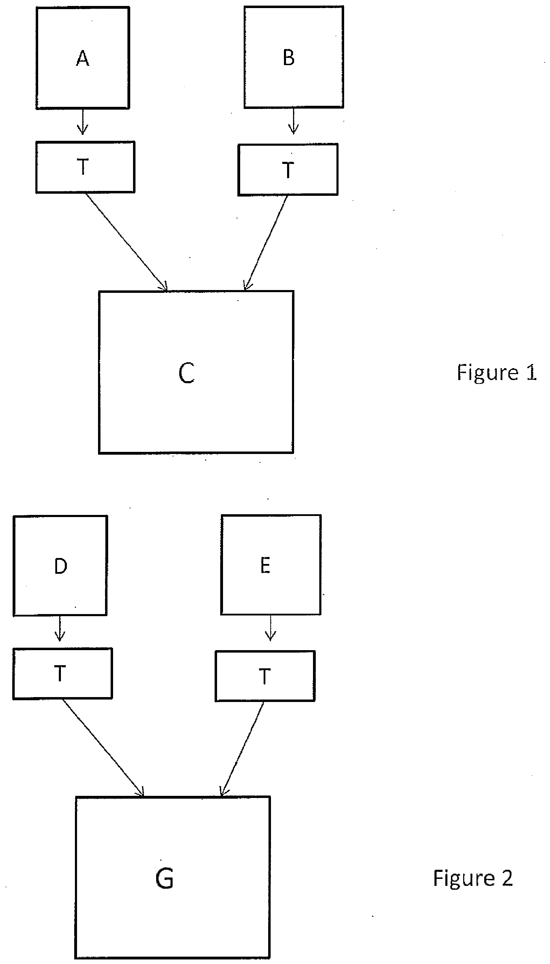

Figure 1 represents diagrammatically a first embodiment of a method for producing a fire resistant material according to the present invention producing precursor product (C), from two kneadable or malleable precursor components (A) and (B) respectively.

The two precursor components (A), (B), are each processed separately into the form of a kneadable composition. The two precursor components (A), (B) are then transported separately (T) to a point of use and are then kneaded together there immediately before use, so that the waterglass hardener in the one precursor component can react with the waterglass in the other precursor component to form a kneadable and malleable precursor product (C). The resultant fire resistant material can then be moulded into a desired shape in a further processing step, or applied as a repair cement to a point on a building element to be secured, and allowed to harden.

### 1. First example of an embodiment of the present invention

For test purposes, the inventors have prepared various examples of embodiments of the precursor product according to the invention with kneadable precursor components, as explained below:

| Precursor component 1 | | Precursor component 2 | |
|---|---|---|---|
| Potassium water glass | 190 g | Aluminium phosphate | 45 g |
| Glycerol | 39 g | Glycerol | 50 g |
| Thixotropic agent | 15 g | Water | 36 g |
| Al(OH)₃ - coarse | 235 g | Thixotropic agent | 9 g |
| Al(OH)₃ - fine | 170 g | Al(OH)₃ - fine | 110 g |

In this example, potassium waterglass is used as a waterglass and aluminium phosphate as a waterglass hardener. Glycerol, water and aluminium hydroxide Al(OH)₃ act as cooling agents. Coarse aluminium hydroxide is understood to mean an aluminium hydroxide with a particle size of greater than or equal to (≥) 150 µm. Fine aluminium hydroxide is understood to mean an aluminium hydroxide with a particle size of less than (<) 150 µm.

### 2. Second example of an embodiment of the present invention

In a second example of an embodiment of the invention, precursor components were produced with the following composition, wherein Ca(OH)₂ was used instead of aluminium phosphate as a waterglass hardener and a dye was added to precursor component 2:

| Precursor component 1 | | Precursor component 2 | |
|---|---|---|---|
| Potassium water glass | 190 g | Glycerol | 77 g |
| Glycerol | 39 g | Water | 36 g |
| Thixotropic agent | 15 g | Thixotropic agent | 10 g |
| Al(OH)₃ - coarse | 235 g | Al(OH)₃ - fine | 110 g |
| Al(OH)₃ - fine | 185 g | Dye | 9g |
| | | Ca(OH)₂ | 24 g |

By means of the dye, the degree of mixing can be checked visually during the kneading of the precursor components at the point of use and in the final precursor product. The Ca(OH)₂ serves not only as a hardener, but also cools the material by release of water at approximately 580 °C. Instead of Ca(OH)₂, calcium oxide can also be used. The latter reacts with water as an intermediary to form calcium hydroxide. The aluminium hydroxide used is a ground aluminium hydroxide with a spherical particle structure and can be hydrated, so that it can act as a cooling agent by water release in the event of a fire.

### 3. Third example of an embodiment of the present invention

In a third example of an embodiment of the invention, precursor components were produced with additional magnesium hydroxide in precursor component 1 and with dye in precursor component 2.

| Precursor component 1 | | Precursor component 2 | |
|---|---|---|---|
| Potassium water glass | 190 g | Aluminium phosphate | 50 g |
| Glycerol | 39 g | Glycerol | 50 g |
| Thixotropic agent | 15 g | Water | 36 g |
| Al(OH)₃ - coarse | 150 g | Thixotropic agent | 9g |
| Mg(OH)₂ | 185 g | Al(OH)₃ - fine | 110 g |
| | | Dye | 9 g |

Magnesium hydroxide is a further cooling agent, which however releases its water later than aluminium hydroxide in the event of a fire. Depending on the positioning of the semi-finished product inside a complex fire resistant system, a release of water at higher temperatures (later onset of the cooling effect during a fire) may be advantageous. This is particularly the case when further materials increase the dwell time of the water in the system by a mutual interaction.

### 4. Fourth example of an embodiment of the present invention

In a fourth example of an embodiment of the invention, precursor components were prepared with additional zinc oxide (ZnO) in precursor component 2 and magnesium hydroxide in precursor component 1.

| Precursor component 1 | | Precursor component 2 | |
|---|---|---|---|
| Potassium waterglass | 190 g | Aluminium phosphate | 50 g |
| Glycerol 86 % | 39 g | Glycerol | 50 g |
| Thixotropic agent | 15 g | Water | 36 g |
| Al(OH)₃ | 150 g | Thixotropic agent | 9g |
| Al(OH)₃ | 170 g | Al(OH)₃ | 60 g |
| Mg(OH)₂ | 85 g | Dye | 9 g |
| | | ZnO | 60 g |

The presence of zinc oxide (ZnO) ensures a high form stability and also provides antibacterial properties.

### 5. Fifth example of an embodiment of the present invention

In a fifth example of an embodiment of the invention, precursor components were prepared with additional silicon dioxide (for example silica gel) in precursor component 1 and calcium hydroxide in precursor component 2.

| Precursor component 1 | | Precursor component 2 | |
|---|---|---|---|
| Sodium waterglass | 190 g | Aluminium phosphate | 50 g |
| Glycerol 86 % | 39 g | Glycerol 86 % | 50 g |
| Thixotropic agent | 15 g | Water | 36 g |
| Al(OH)₃ - coarse | 150 g | Thixotropic agent | 9g |
| Al(OH)₃ - fine | 170 g | Al(OH)₃ - fine | 60 g |
| Mg(OH)₂ | 35 g | Dye | 9 g |
| SiO₂ | 55 g | ZnO | 50 g |
| | | Ca(OH)₂ | 7 g |

Silica gel, as a cooling agent, is able to store water, and depending on the structure, is able to release it again in the temperature range of between 100 and 350 °C. Through the addition of silica gel, it is possible for a cooling effect to commence at lower temperatures compared to when aluminium hydroxide is used alone. Silica gel enters into a strong interaction with water vapour. Therefore, using silica gel which contains water, delays the loss of water in the event of a fire. The use of such a cooling agent is advantageous, especially when used in the outer cavities and also passes fire tests.

### 6. Sixth example of an embodiment of the present invention

In a sixth example of an embodiment of the invention, precursor components with additional silica in precursor component 1 and with an organic polymer in precursor component 2 were reacted.

| Precursor component 1 | | Precursor component 2 | |
|---|---|---|---|
| Potassium water glass | 100 g | Aluminium phosphate | 45 g |
| Glycerol | 10 g | Glycerol | 50 g |
| Thixotropic agent | 10 g | Water | 36 g |
| Al(OH)₃ - coarse | 20 g | Thixotropic agent | 9 g |
| Al(OH)₃ fine | 160 g | Al(OH)₃ fine | 110 g |
| Disilicate | 20 g | Dye | 9 g |
| SiO₂ | 55 g | Polymer | 5 g |

The use of a polymer influences the properties of the end product, such as for example its elasticity. The addition of polymers in the case were greater mechanical loading of the building component is required can thus be advantageous. In this context, a granulated waterglass with approximately 20 % residual moisture is denoted as di-silicate. The latter can act both as a cooling agent and as a foaming agent in mixtures of this kind, and can also react with the waterglass hardener if sufficient water is added.

### 7. Seventh example of an embodiment of the present invention

| Precursor component 1 | | Precursor component 2 | |
|---|---|---|---|
| Sodium waterglass | 190 g | Aluminium phosphate | 45 g |
| Glycerine | 39 g | Glycerine | 50 g |
| Thixotropic agent | 15 g | Water | 36 g |
| Al(OH)₃ - coarse | 235 g | Thixotropic agent | 9 g |
| Al(OH)₃ - fine | 170 g | Al(OH)₃ - fine | 110 g |
| | | NaF | <0,05 g |

As fluoride has fungicidal properties, it may be used in fire resistant material of the present invention to prevent fungal attack.

### 8. Eighth example of an embodiment of the present invention

| Precursor component 1 | | Precursor component 2 | |
|---|---|---|---|
| Sodium waterglass (solid) | 250 g | Casein | 60 g |
| Thixotropic agent | 15 g | Al(OH)₃ - coarse | 100 g |
| Al(OH)₃ - fine | 200 g | Ca(OH)₂ | 60 g |
| | | Al(OH)₃ - fine | 110 g |
| | | Vermiculite (raw) | 10 g |

| Precursor component 3 | |
|---|---|
| Sodium waterglass | 200 g |
| Glycerol | 86 g |
| Water | 14 g |

The eighth example according to the present invention demonstrates an advantageous embodiment which comprises three precursor components. Solid waterglass has a specific quantity of residual water which is able to react under unfavourable conditions with waterglass hardeners. It is therefore advantageous if the latter are separated from one another. The cooling agent aluminium hydroxide and raw vermiculite serve simultaneously as a separating agent. This is advantageous, since a possible agglomeration during mixing of the precursor components may be for the most part prevented. A further advantage of this composition is that it becomes intumescent in the event of a fire and is thus able to act in a cooling and insulating manner.

### 9. Ninth example of an embodiment of the present invention

| Precursor component 1 | | Precursor component 2 | |
|---|---|---|---|
| Casein | 100 g | Ca(OH)₂ | 9g |
| Al(OH)₃ - fine | 50 g | Al(OH)₃ - fine | 50 g |

| Precursor component 3 | |
|---|---|
| Waterglass | 20-50 g |

The ninth example of an embodiment of the present invention shows the composition for a water-resistant fire protection adhesive. The main advantage of this composition is that, even after the drying of thin layers, the adhesion of a plurality of building components coated with this mixture is still possible under pressure and at temperatures of approximately 100 °C. Whilst storage of a mixture of precursor components 1 and 2 is in principle also possible, it has emerged that the durability of such a composition is less than in the case of separate storage of precursor components 1 and 2. It will also be appreciated that sufficient water may be added to for example precursor component 3, as required to establish the desired viscosity and enable pouring of the precursor product.

### 10. Tenth example of an embodiment of the present invention

| Precursor component 1 | | Precursor component 2 | |
|---|---|---|---|
| Sodium waterglass | 190 g | Aluminium phosphate | 45 g |
| Glycerol | 39 g | Glycerol | 50 g |
| Thixotropic agent | 15 g | Water | 36 g |
| Hollow glass spheres | 75 g | Thixotropic agent | 9 g |
| Al(OH)₃ - fine | 170 g | Al(OH)₃ - fine | 80 g |
| | | Wood chippings | 10 g |

To improve the insulating properties of the fire resistant material, hollow glass spheres and wood chippings were added to the precursor components in the tenth example of an embodiment of the present invention. Generally, insulating agents such as expanded clay or organic filler materials may be added to all of the precursor components of the aforementioned examples of embodiments. In addition, foaming agents, which foam up or swell in the event of a fire and thus also act in an insulating manner, may be added to all of the precursor components. Most suitable are foaming agents such as vermiculite or solid waterglass, in such embodiments the foaming agent is at the same time a cooling agent. The foaming agent is advantageously water vapour. Further commercially used foaming agents are known to the person skilled in the art. Furthermore, strength-increasing additives such as fibres or fabric tapes may be added to all of the precursor components.

Generally, the hardening of the finished fire resistant compound may be accelerated by temporary temperature and/or pressure increase.

### Water-form stability tests

Each of the precursor products formed from the embodiments described in experiments 1 to 10 above were tested for form stability in water. That is, for each embodiment, the precursor components were mixed together to form a precursor product. The precursor product was then moulded or poured into a rigid mould and allowed to harden. Once hardened, the moulded precursor component was immersed in water for a period of five weeks.

After five weeks, each precursor component was removed and tested for cracks and damage. Each precursor component was also reinserted into the rigid mould to see if any expansion of the precursor product had occurred during emersion of the product in water. Analysis showed that there had been no observable increase or decrease in size of the precursor component over time, with each component fitting the rigid mould. In addition, no damage or cracking of the precursor product was observed over time. Therefore it can be concluded that the precursor products are suitable for use as fire resistant materials as the precursor components possess both a high resistance to water and also retain shape over time. That is, the precursor components are both moisture resistant and water-form stable.

Figure 2 represents diagrammatically a second embodiment of method for producing a fire resistant material according to the present invention producing precursor product (G), from a liquid precursor component (E) and a precursor component constituted as a solid (D);

The two precursor components (D) and (E) are transported (T) to the point of use in separable containers and are mixed there immediately before use to form a kneadable and malleable precursor component (G), a casting material or as a compression moulding material. Water, ethylene glycol and/or glycerine may be added if need be as further precursor components, so that the waterglass hardener is able to sufficiently react with the waterglass. The resultant fire resistant material can then be moulded into a desired shape in a further processing step or applied as a repair cement to a point on a building element to be secured and can harden there.

In further embodiments of the invention, the precursor product (G) is produced as a pumpable liquid, again with the addition of a solvent as required during the mixing of the precursor components (D) and (E). The pumpable liquid can then be filled into a casting mould or a cavity and allowed to harden.

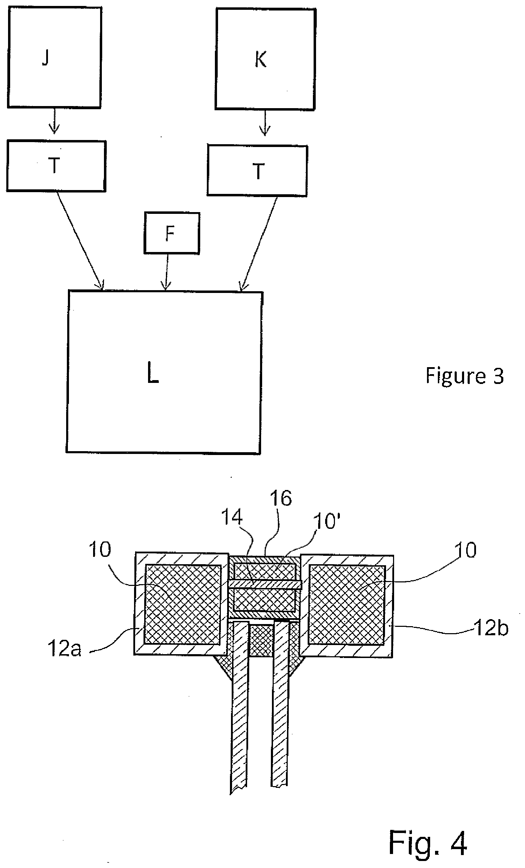

Figure 3 represents diagrammatically a further alternative third embodiment of a method for producing a fire resistant material according to the present invention producing precursor product (L), from two precursor components constituted as a solid (J) and (L) respectively in combination with liquid (F);

The two precursor components (J) and (K) are transported (T) to a point of use in separable containers and are protected against contact with moisture. The two precursor components are then mixed together directly before use and are processed to form a kneadable composition. Fluid (F) in the form of water and/or polyols may be added so that the waterglass hardener can react with the waterglass. In addition, it is possible to transport the two precursor components to a point of use premixed in dry form protected from moisture and to then activate the components at the point of use by the addition of water and/or polyols. The resultant fire resistant material can then be moulded into a desired shape in a further processing step or applied as a repair cement to a point on a building element to be secured and then can harden there.

In a further embodiment of the invention, a pumpable liquid may be produced from components (J) and (K), if need be with the addition of a solvent (F) during the mixing of the precursor components. The pumpable liquid can then be filled into a casting mould or a cavity and be allowed to harden there.

Figure 4 shows a window profile produced according to the invention filled with a fire resistant material 10. The window profile comprises two cavities in metal profiles 12a, 12b, which are each filled with one of the above-described liquid mixtures of precursor components, so that fire resistant material 10 can hardened inside the cavities. Metal profiles 12a, 12b are connected by pins 14. A profile bar 16 with holes for pins 14 is inserted between metal profiles 12a, 12b, said profile bar being filled with another fire resistant material 10'.

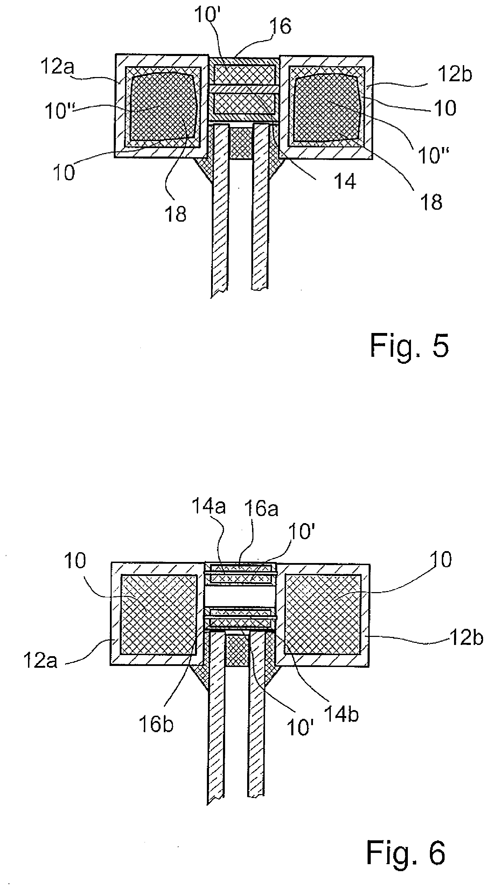

Figure 5 shows a window profile produced according to the invention filled with three different fire resistant materials 10, 10', 10". The window profile comprises two cavities in metal profiles 12a, 12b, into each of which a preshaped building block 18 made of a first fire resistant material 10" is first inserted. A liquid mixture produced from precursor components of a precursor product according to the invention, is then poured into the air gaps remaining between the inserted shaped building blocks 18 and the inner surfaces of the cavities to fill the cavities with the liquid mixture comprising the precursor components. Said liquid mixture then hardens to form a second fire resistant material 10. First fire resistant material 10" can differ from second fire resistant material 10 in nature and composition, but it can also largely correspond thereto. As also in the example of embodiment from Figure 4, a profile bar 16 filled with a further fire resistant material 10' can be arranged between metal profiles 12a, 12b.

Figure 6 shows a further embodiment of a profile produced according to the invention. The example of embodiment in Figure 6 differs from the example embodiment in Figure 4 in that metal profiles 12a, 12b are connected by pins 14a, 14b at a different distance from the edge of the window glass and that, instead of a single profile bar 16 filled with fire resistant material 10', two profile bars 16a, 16b are each filled with fire resistant material 10' and are arranged at a different distance from the window glass, said profile bars each having holes for pins 14a, 14b.

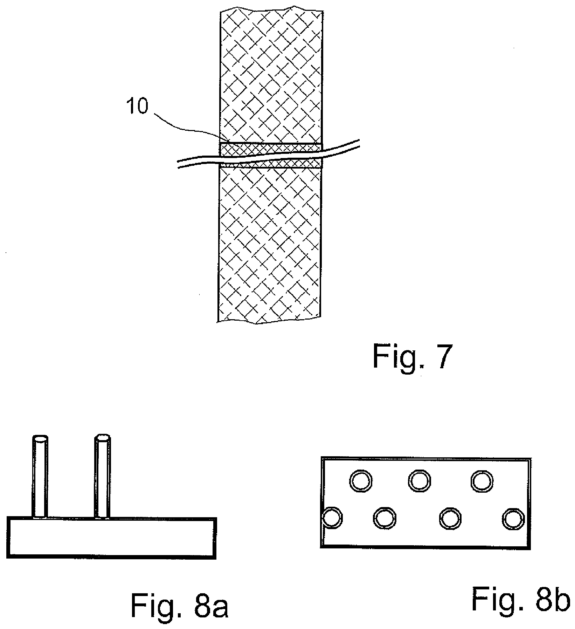

Figure 7 shows diagrammatically a cable gland sealed with a fire resistant material 10 produced according to the invention.

Figures 8a and 8b show in detail pins 14a, 14b shown in Figures 4 to 6. Said pins can comprise a solid metal or tubes, which are then preferably filled with a fire resistant material. Tubes filled with fire resistant material are advantageous, since the thermal conduction between the metal profiles is drastically reduced. The cross-section of the pins may be round or polygonal. A hexagonal or octagonal cross-section can thus use the space available in the optimum manner.

## Claims

1. A method of filling cracks in existing fire resistant material located within door and window glazing frames, or of filling cavities within building elements such as door or window frames, dry wall constructions, floors, panels or filler bars, to produce a building element or a semi-finished product at least partially filled with a fire resistant material comprising the steps of:
i) at the point of use, mixing together at least two precursor components prepared and retained separately in at least one transportable container, to form a precursor product;
ii) applying the precursor product to the cracks or cavities in the existing fire resistant material in the glazing frames or to the cavities within the building element; and
iii) allowing the precursor product to harden to form a fire resistant material, wherein
one of the at least two precursor components comprises at least one waterglass; and a second of the at least two precursor components comprises a waterglass hardener; and wherein at least one of the two precursor components comprises a cooling agent and/or an insulating agent; and wherein
the waterglass and waterglass hardener are kept separate prior to the point of use; and wherein
the waterglass is present in the precursor product in a concentration range of from 2 to 90 wt %; and
wherein the waterglass hardener is present in the second precursor component in a concentration range of 0.5 to 50 wt %; and wherein
once hardened the fire resistant material forms a water-form stable and water stable fire resistant material which does not change shape by more than 20 % following contact with water.

2. The method according to claim 1, further comprising the step of:
iv) inserting a shaped building block (18) comprising a first preformed fire resistant material (10") into the cavity of the glazing frame and any remaining part of the cavity is then filled with the precursor product comprising the at least two precursor components.

3. The method according to claim 1 or 2 wherein in step i):
the at least two precursor components are mixed to form a solid mixture; and
the solid mixture is activated by the addition of at least one liquid, preferably water and/or ethylene glycol and/or glycerol in a suitable quantity to form the precursor product, followed by application of the precursor product to the cracks or cavities within existing fire resistant material or building elements.

4. The method according to claim 1 or 2 **characterised in that** in step i):
the two precursor components are both present as solids; and
one of the two precursor components is mixed in a first step with at least one liquid, preferably water and/or ethylene glycol and/or glycerol;
followed by the addition of the second precursor component to form the precursor product.

5. The method according to any one of claims 1 to 4, wherein the at least two precursor components are mixed together immediately before use at the point of installation.

6. The method according to any one of the preceding claims **characterised in that**:
each of the two precursor components comprises at least one cooling agent and/or insulating agent, and wherein
the cooling agent is selected from the group comprising: Al(OH)₃, Mg(OH)₂, Silica, Ca(OH)₂, glycerol, ethylene glycol, polyethylene glycol, iron hydroxides and zinc hydroxide, and wherein
the insulating agent is selected from the group comprising: glass foam bubbles, glass hollow bubbles, ceramic foam bubbles, ceramic hollow bubbles, wood and wood chips, vermiculite and celluloses, and wherein
the cooling agent and/or insulating agent is present in the precursor product in a concentration range of from 25% to 85% by weight.

7. The method according to any one of the preceding claims, **characterised in that**:
at least one of the precursor components further comprises at least one filler material, and wherein
the at least one filler material comprises one or more of: magnesium hydroxide, aluminium hydroxide, aluminium oxide hydrates, partially hydrated magnesium hydroxide and partially hydrated aluminium hydroxide slags, smectite, perlite, mica and vermiculite; and/or wherein
the at least one filler material acts as a cooling agent and/or insulating agent in the event of contact with fire.

8. The method according to any one of the preceding claims **characterised in that**:
at least one of the at least two precursor components is in the form of: a liquid, preferably a liquid solution; a dispersion, preferably an emulsion; or a suspension.

9. The method according to any one of the preceding claims **characterised in that**:
at least one of the at least two precursor components is a kneadable compound, or
at least two of the at least two precursor components are kneadable compounds, or
at least one of the at least two precursor components is a kneadable compound and the second precursor component is a liquid.

10. The method according to any one of the preceding claims **characterised in that**:
at least one of the at least two precursor components further comprises an agent for controlling moisture balance which comprises one or more compounds selected from clay minerals, silica gel or zeolites.

11. The method according to any one of the preceding claims **characterised in that**:
at least one of the at least two precursor components further comprises organic components, wherein the organic components comprise one or more compounds selected from methyl cellulose, hydroxymethyl-cellulose and/or other cellulose derivatives.

12. The method according to any preceding claim **characterised in that**:
at least one of the at least two precursor components further comprises a colourant selected from a pigment or a dye, preferably a pigment; and/or wherein the colourant acts as a cooling agent.

13. The method according to any one of the preceding claims wherein the ratio of the sum of the waterglass to the ratio of the sum of the waterglass hardener is in the range of 30: 1 to 1: 1; and/or wherein the ratio of the sum of the waterglass to the ratio of the sum of the waterglass hardener is in the range of 15: 1 to 2: 1; and/or wherein the ratio of the sum of the waterglass to the ratio of the sum of the waterglass hardener is in the range of 10: 1 to 3: 1.

14. The method according to any one of the preceding claims wherein the waterglass is selected from the group comprising: sodium waterglass, potassium waterglass, lithium waterglass or mixtures thereof; and/or wherein the waterglasshardener is selected from the group comprising: aluminium phosphates, CaO, zinc compounds, Ca(OH)₂ and triglyceride 1,2,3-triacetoxypropane.

15. A kit for preparing a water stable and water-form stable fire resistant material from a precursor product according to the method of any of claims 1 to 14 with at least two precursor components wherein the kit comprises:
i) a first precursor components comprising at least one waterglass; and
ii) a second precursor components comprising at least one waterglass hardener; wherein the first and second components are contained in a receptacle and wherein the precursor components are separated from each other prior to mixing at the point of use or repair, and wherein
once hardened the water stable and water-form stable fire resistant material does not change shape by more than 20 % following contact with water.

16. A kit according to claim 15 further comprising:
at least one cooling agent and/or an insulating agent; wherein
the cooling and/or insulating agent is/are either separated from the at least one waterglass and/or the at least one water glass hardener, or wherein
the cooling and/or insulating agent is provided with the at least one waterglass and the at least one water glass hardener.

## Patentansprüche

1. Verfahren zum Füllen von Rissen in vorhandenem feuerbeständigem Material, das sich innerhalb von Tür- und Fensterverglasungsrahmen befindet, oder zum Füllen von Hohlräumen in Bauelementen wie Tür- oder Fensterrahmen, Trockenbauwänden, Fußböden, Paneelen oder Füllstäben, um ein Bauelement oder ein halbfertiges Produkt herzustellen, das zumindest teilweise mit einem feuerbeständigen Material gefüllt ist, umfassend die Schritte:
i) an der Verwendungsstelle, Zusammenmischen von mindestens zwei getrennt in mindestens einem transportablen Behälter vorbereiteten und aufbewahrten Vorläuferkomponenten, um ein Vorläuferprodukt zu bilden;
ii) Anwenden des Vorläuferprodukts auf die Risse oder Hohlräume in dem vorhandenen feuerbeständigen Material in den Verglasungsrahmen oder auf die Hohlräume innerhalb des Bauelements; und
iii) Aushärtenlassen des Vorläuferprodukts, um ein feuerbeständiges Material zu bilden, wobei
eine der mindestens zwei Vorläuferkomponenten mindestens ein Wasserglas umfasst; und eine zweite der mindestens zwei Vorläuferkomponenten einen Wasserglashärter umfasst; und wobei mindestens eine der zwei Vorläuferkomponenten ein Kühlmittel und/oder ein Isoliermittel umfasst; und wobei
das Wasserglas und der Wasserglashärter vor dem Verwendungszeitpunkt getrennt gehalten werden; und wobei
das Wasserglas in dem Vorläuferprodukt in einem Konzentrationsbereich von 2 bis 90 Gew.-% vorhanden ist; und
wobei der Wasserglashärter in der zweiten Vorläuferkomponente in einem Konzentrationsbereich von 0,5 bis 50 Gew.-% vorhanden ist; und wobei
das feuerbeständige Material nach dem Aushärten ein wasserformstabiles und wasserstabiles feuerbeständiges Material bildet, das nach Kontakt mit Wasser seine Form um nicht mehr als 20 % ändert.

2. Verfahren nach Anspruch 1 , das ferner den Schritt umfasst:
iv) Einsetzen eines Formbausteins (18), der ein erstes vorgeformtes feuerbeständiges Material (10") umfasst, in den Hohlraum des Verglasungsrahmens und anschließendes Ausfüllen des verbleibenden Teils des Hohlraums mit dem die mindestens zwei Vorläuferkomponenten umfassenden Vorläuferprodukt.

3. Verfahren nach Anspruch 1 oder 2, bei dem in Schritt i):
die mindestens zwei Vorläuferkomponenten gemischt werden, um ein festes Gemisch zu bilden; und
das feste Gemisch durch Zugabe mindestens einer Flüssigkeit, vorzugsweise Wasser und/oder Ethylenglykol und/oder Glycerin, in geeigneter Menge aktiviert wird, um das Vorläuferprodukt zu bilden, und anschließend das Vorläuferprodukt auf die Risse oder Hohlräume innerhalb des vorhandenen feuerbeständigen Materials oder der Bauelemente angewandt wird.

4. Verfahren nach Anspruch 1 oder 2, **dadurch gekennzeichnet, dass** in Schritt i):
die zwei Vorläuferkomponenten beide als Feststoffe vorliegen; und
eine der beiden Vorläuferkomponenten in einem ersten Schritt mit mindestens einer Flüssigkeit, vorzugsweise Wasser und/oder Ethylenglykol und/oder Glycerin, vermischt wird;
gefolgt von der Zugabe der zweiten Vorläuferkomponente, um das Vorläuferprodukt zu bilden.

5. Verfahren nach einem der Ansprüche 1 bis 4, bei dem die mindestens zwei Vorläuferkomponenten unmittelbar vor der Verwendung an der Einbaustelle miteinander vermischt werden.

6. Verfahren nach einem der vorhergehenden Ansprüche, **dadurch gekennzeichnet, dass**
jede der beiden Vorläuferkomponenten mindestens ein Kühlmittel und/oder Isoliermittel umfasst, und wobei
das Kühlmittel ausgewählt ist aus der Gruppe umfassend: Al(OH)₃, Mg(OH)₂, Siliziumdioxid, Ca(OH)₂, Glycerin, Ethylenglykol, Polyethylenglykol, Eisenhydroxide und Zinkhydroxid, und wobei
das Isoliermittel ausgewählt ist aus der Gruppe umfassend: Glasschaumblasen, Glashohlblasen, Keramikschaumblasen, Keramikhohlblasen, Holz und Holzspäne, Vermiculit und Zellulosen, und wobei
das Kühlmittel und/oder Isoliermittel in dem Vorläuferprodukt in einem Konzentrationsbereich von 25 bis 85 Gew.-% vorhanden ist.

7. Verfahren nach einem der vorhergehenden Ansprüche, **dadurch gekennzeichnet, dass**:
mindestens eine der Vorläuferkomponenten ferner mindestens ein Füllmaterial umfasst, und
das mindestens eine Füllmaterial eines oder mehrere der folgenden Materialien umfasst: Magnesiumhydroxid, Aluminiumhydroxid, Aluminiumoxidhydrate, teilhydratisiertes Magnesiumhydroxid und teilhydratisierte Aluminiumhydroxidschlacken, Smektit, Perlit, Glimmer und Vermiculit; und/oder
das mindestens eine Füllmaterial im Falle des Kontakts mit Feuer als Kühlmittel und/oder Isoliermittel wirkt.

8. Verfahren nach einem der vorhergehenden Ansprüche, **dadurch gekennzeichnet, dass**
mindestens eine der mindestens zwei Vorläuferkomponenten in Form von: einer Flüssigkeit, vorzugsweise einer flüssigen Lösung; einer Dispersion, vorzugsweise einer Emulsion; oder einer Suspension vorliegt.

9. Verfahren nach einem der vorhergehenden Ansprüche, **dadurch gekennzeichnet, dass**:
mindestens eine der mindestens zwei Vorläuferkomponenten eine knetbare Verbindung ist, oder
mindestens zwei der mindestens zwei Vorläuferkomponenten knetbare Verbindungen sind, oder
mindestens eine der mindestens zwei Vorläuferkomponenten eine knetbare Verbindung ist und die zweite Vorläuferkomponente eine Flüssigkeit ist.

10. Verfahren nach einem der vorhergehenden Ansprüche, **dadurch gekennzeichnet, dass**
mindestens eine der mindestens zwei Vorläuferkomponenten ferner ein Mittel zur Steuerung des Feuchtigkeitsgleichgewichts umfasst, das eine oder mehrere Verbindungen ausgewählt aus Tonmineralien, Kieselgel oder Zeolithen umfasst.

11. Verfahren nach einem der vorhergehenden Ansprüche, **dadurch gekennzeichnet, dass**
mindestens eine der mindestens zwei Vorläuferkomponenten ferner organische Komponenten umfasst, wobei die organischen Komponenten eine oder mehrere Verbindungen ausgewählt aus Methylcellulose, Hydroxymethylcellulose und/oder anderen Cellulosederivaten umfassen.

12. Verfahren nach einem der vorhergehenden Ansprüche, **dadurch gekennzeichnet, dass**
mindestens eine der mindestens zwei Vorläuferkomponenten ferner ein Farbmittel, ausgewählt aus einem Pigment oder einem Farbstoff, vorzugsweise einem Pigment, umfasst; und/oder wobei das Farbmittel als Kühlmittel wirkt.

13. Verfahren nach einem der vorhergehenden Ansprüche, bei dem das Verhältnis der Summe des Wasserglases zu dem Verhältnis der Summe des Wasserglashärters im Bereich von 30: 1 bis 1: 1 liegt; und/oder bei dem das Verhältnis der Summe des Wasserglases zu dem Verhältnis der Summe des Wasserglashärters im Bereich von 15: 1 bis 2: 1 liegt; und/oder bei dem das Verhältnis der Summe des Wasserglases zu dem Verhältnis der Summe des Wasserglashärters in dem Bereich von 10: 1 bis 3: 1 liegt.

14. Verfahren nach einem der vorhergehenden Ansprüche, bei dem das Wasserglas ausgewählt ist aus der Gruppe umfassend:
Natriumwasserglas, Kaliumwasserglas, Lithiumwasserglas oder Gemische davon; und/oder bei dem der Wasserglashärter ausgewählt ist aus der Gruppe umfassend:
Aluminiumphosphate, CaO, Zinkverbindungen, Ca(OH)₂ und das Triglycerid 1,2,3-Triacetoxypropan.

15. Kit zur Herstellung eines wasserstabilen und wasserformstabilen feuerbeständigen Materials aus einem Vorläuferprodukt nach dem Verfahren eines der Ansprüche 1 bis 14 mit mindestens zwei Vorläuferkomponenten, wobei das Kit umfasst:
i) eine erste Vorläuferkomponente, die mindestens ein Wasserglas umfasst; und
ii) eine zweite Vorläuferkomponente, die mindestens einen Wasserglas-Härter umfasst; wobei die erste und die zweite Komponente in einem Behälter enthalten sind und wobei die Vorläuferkomponenten vor dem Mischen am Ort der Verwendung oder Reparatur voneinander getrennt sind, und wobei
das wasserstabile und wasserformstabile feuerbeständige Material nach dem Aushärten bei Kontakt mit Wasser seine Form um nicht mehr als 20 % ändert.

16. Kit nach Anspruch 15, der ferner umfasst:
mindestens ein Kühlmittel und/oder ein Isoliermittel; wobei das Kühl- und/oder Isoliermittel entweder von dem mindestens einen Wasserglas und/oder dem mindestens einen Wasserglashärter getrennt ist/ sind, oder wobei
das Kühl- und/ oder Isoliermittel mit dem mindestens einen Wasserglas und dem mindestens einen Wasserglashärter versehen ist.

## Revendications

1. Procédé de remplissage de fissures dans un matériau ignifuge existant disposé à l'intérieur de cadres de vitrage de porte et fenêtre, ou de remplissage de cavités à l'intérieur d'éléments de construction, tels que des cadres de porte ou fenêtre, constructions de parois sèches, planchers, panneaux ou barres de charge, pour produire un élément de construction ou un produit semi-fini rempli au moins partiellement d'un matériau ignifuge comprenant les étapes de :
i) au point d'utilisation, mélange ensemble d'au moins deux constituants de précurseurs préparés et retenus séparément dans au moins un récipient transportable, pour former un produit de précurseur ;
ii) application du produit de précurseur aux fissures ou cavités dans le matériau ignifuge existant dans les cadres de vitrage ou aux cavités à l'intérieur de l'élément de construction ; et
iii) laisser le produit de précurseur durcir pour former un matériau ignifuge, dans lequel
un des au moins deux constituants de précurseurs comprend au moins un verre soluble ; et un second des au moins deux constituants de précurseurs comprend un durcisseur de verre soluble ; et dans lequel au moins un des deux constituants de précurseurs comprend un agent réfrigérant et/ou un agent isolant ; et dans lequel
les verre soluble et durcisseur de verre soluble sont maintenus séparés avant le point d'utilisation ; et dans lequel
le verre soluble est présent dans le produit de précurseur dans un intervalle de concentration de 2 à 90 % en masse ; et
dans lequel le durcisseur de verre soluble est présent dans le second constituant de précurseur dans un intervalle de concentration de 0,5 à 50 % en masse ; et dans lequel
une fois durci le matériau ignifuge forme un matériau ignifuge stable en forme aqueuse et stable dans l'eau qui ne change pas en forme de plus de 20 % après contact avec l'eau.

2. Procédé selon la revendication 1, comprenant de plus l'étape de :
iv) insertion d'un bloc de construction façonné (18) comprenant un premier matériau ignifuge préformé (10") dans la cavité du cadre de vitrage et toute partie restante de la cavité est ensuite remplie avec le produit de précurseur comprenant les au moins deux constituants de précurseurs.

3. Procédé selon la revendication 1 ou 2, dans lequel dans l'étape i) :
les au moins deux constituants de précurseurs sont mélangés pour former un mélange solide ; et
le mélange solide est activé par l'addition d'au moins un liquide, de préférence d'eau et/ou éthylène glycol et/ou glycérol dans une quantité appropriée pour former le produit de précurseur, suivi par l'application du produit de précurseur aux fissures ou cavités dans le matériau ignifuge existant ou les éléments de construction.

4. Procédé selon la revendication 1 ou 2, **caractérisé en ce que** dans l'étape i) :
les deux constituants de précurseurs sont tous deux présents comme solides ; et
un des deux constituants de précurseurs est mélangé dans une première étape avec au moins un liquide, de préférence de l'eau et/ou éthylène glycol et/ou glycérol ;
suivi par l'addition du second constituant de précurseur pour former le produit de précurseur.

5. Procédé selon l'une quelconque des revendications 1 à 4, dans lequel les au moins deux constituants de précurseurs sont mélangés ensemble immédiatement avant l'utilisation au point d'installation.

6. Procédé selon l'une quelconque des revendications précédentes, **caractérisé en ce que** :
chacun des deux constituants de précurseurs comprend au moins un agent réfrigérant et/ou agent isolant, et dans lequel
l'agent réfrigérant est choisi dans le groupe comprenant : Al(OH)₃, Mg(OH)₂, silice, Ca(OH)₂, glycérol, éthylène glycol, polyéthylène glycol, hydroxydes de fer et hydroxyde de zinc, et dans lequel
l'agent isolant est choisi dans le groupe comprenant : des bulles de mousse de verre, bulles creuses de verre, bulles de mousse de céramique, bulles creuses de céramique, bois et copeaux de bois, vermiculite et celluloses, et dans lequel
l'agent réfrigérant et/ou agent isolant est présent dans le produit de précurseur dans un intervalle de concentration de 25 % à 85 % en masse.

7. Procédé selon l'une quelconque des revendications précédentes, **caractérisé en ce que** :
au moins un des constituants de précurseurs comprend de plus au moins un matériau de charge, et dans lequel
le au moins un matériau de charge comprend un ou plusieurs de : hydroxyde de magnésium, hydroxyde d'aluminium, hydrates d'oxyde d'aluminium, scories d'hydroxyde de magnésium partiellement hydraté et hydroxyde d'aluminium partiellement hydraté, smectite, perlite, mica et vermiculite ; et/ou dans lequel
le au moins un matériau de charge agit comme un agent réfrigérant et/ou agent isolant dans l'éventualité de contact avec du feu.

8. Procédé selon l'une quelconque des revendications précédentes **caractérisé en ce que** :
au moins un des au moins deux constituants de précurseurs est dans la forme de : un liquide, de préférence une solution liquide ; une dispersion, de préférence une émulsion ; ou une suspension.

9. Procédé selon l'une quelconque des revendications précédentes, **caractérisé en ce que** :
au moins un des au moins deux constituants de précurseurs est un composé malaxable, ou
au moins deux des au moins deux constituants de précurseurs sont des composés malaxables, ou
au moins un des au moins deux constituants de précurseurs est un composé malaxable et le second constituant de précurseur est un liquide.

10. Procédé selon l'une quelconque des revendications précédentes, **caractérisé en ce que** :
au moins un des au moins deux constituants de précurseurs comprend de plus un agent pour contrôler l'équilibre d'humidité qui comprend un ou plusieurs composés choisis parmi des minéraux d'argile, du gel de silice ou des zéolites.

11. Procédé selon l'une quelconque des revendications précédentes, **caractérisé en ce que** :
au moins un des au moins deux constituants de précurseurs comprend de plus des constituants organiques, dans lequel les constituants organiques comprennent un ou plusieurs composés choisis parmi la méthylcellulose, hydroxyméthyl-cellulose et/ou autres dérivés de cellulose.

12. Procédé selon l'une quelconque des revendications précédentes, **caractérisé en ce que** :
au moins un des au moins deux constituants de précurseurs comprend de plus un colorant choisi parmi un pigment ou une teinture, de préférence un pigment ; et/ou dans lequel le colorant agit comme un agent réfrigérant.

13. Procédé selon l'une quelconque des revendications précédentes, dans lequel le rapport de la somme du verre soluble au rapport de la somme du durcissant de verre soluble se trouve dans l'intervalle de 30:1 à 1:1 ; et/ou dans lequel le rapport de la somme du verre soluble au rapport de la somme du durcissant de verre soluble se trouve dans l'intervalle de 15:1 à 2:1 ; et/ou dans lequel le rapport de la somme du verre soluble au rapport de la somme du durcissant de verre soluble se trouve dans l'intervalle de 10:1 à 3:1.

14. Procédé selon l'une quelconque des revendications précédentes, dans lequel le verre soluble est choisi dans le groupe comprenant : verre soluble de sodium, verre soluble de potassium, verre soluble de lithium ou mélanges de ceux-ci ; et/ou dans lequel le durcissant de verre soluble est choisi dans le groupe comprenant : phosphates d'aluminium, CaO, composés de zinc, Ca(OH)₂ et triglycéride 1,2,3-triacétoxypropane.

15. Kit pour la préparation d'un matériau ignifuge stable dans l'eau et stable en forme aqueuse à partir d'un produit de précurseur selon le procédé selon l'une quelconque des revendications 1 à 14 avec au moins deux constituants de précurseurs, dans lequel le kit comprend :
i) un premier constituant de précurseur comprenant au moins un verre soluble ; et
ii) un second constituant de précurseur comprenant au moins un durcissant de verre soluble ; dans lequel les premier et second constituants sont contenus dans un réceptable et dans lequel les constituants de précurseurs sont séparés l'un de l'autre avant le mélange au point d'utilisation ou réparation, et dans lequel
une fois durci le matériau ignifuge stable dans l'eau et stable en forme aqueuse ne change pas en forme de plus de 20 % après contact avec l'eau.

16. Kit selon la revendication 15 comprenant de plus :
au moins un agent réfrigérant et/ou un agent isolant ; dans lequel
l'agent réfrigérant et/ou isolant est/sont soit séparés du au moins un verre soluble et/ou du au moins un durcissant de verre soluble, soit dans lequel
l'agent réfrigérant et/ou isolant est fourni avec le au moins un verre soluble et le au moins un durcissant de verre soluble.
